# EUROPÄISCHE PATENTSCHRIFT

(11) **EP 1 436 676 B1**
(45) Veröffentlichungstag und Bekanntmachung des Hinweises auf die Patenterteilung: **02.11.2006**
(21) Anmeldenummer: 02774432.5
(22) Anmeldetag: 26.09.2002
(51) Int. Cl.: G05B 19/418

(54) **VERFAHREN ZUM BEDIENEN UND ZUM BEOBACHTEN VON FELDGER TEN**
METHOD FOR OPERATING AND OBSERVING FIELD DEVICES
PROCEDE PERMETTANT DE FAIRE FONCTIONNER ET D'OBSERVER DES APPAREILS UTILISABLES IN SITU

(30) Priorität: 15.10.2001 DE 10151115
(43) Veröffentlichungstag der Anmeldung: 14.07.2004
(73) Patentinhaber: SIEMENS AKTIENGESELLSCHAFT, 80333 München (DE)
(72) Erfinder: JURISCH, Andreas, 16727 Schwante (DE); SCHWENKE, Michael, 15366 Hönow (DE); WALZ, Stefan, 13127 Berlin (DE)
(86) Internationale Anmeldenummer: PCT/DE2002/003711
(87) Internationale Veröffentlichungsnummer: WO 2003/038535

(56) Entgegenhaltungen:
- WO-A-00/77592
- WO-A-99/13388

## Beschreibung

Die Erfindung liegt auf dem Gebiet des ferngesteuerten Betreibens von Feldgeräten, insbesondere zum Zweck des Beobachtens und Bedienens von Feldgeräten, beispielsweise in energietechnischen Anlagen.

Feldgeräte werden im Rahmen der Automatisierung von verschiedensten technischen Prozessen genutzt, beispielsweise zum Überwachen eines Produktions- bzw. Herstellungsprozesses oder eines Verarbeitungsprozesses. Bei den Feldgeräten kann es sich um die Produktionsanlagen selbst oder um Geräte zum Überwachen, vorzugsweise zum Steuern und/oder zum Regeln in Abhängigkeit von erfassten Felddaten, der eingesetzten technischen Produktionsmittel bzw. -anlagen handeln.

Beim Bedienen der Feldgeräte im Einsatz können grundsätzlich zwei Arten der Bedienung unterschieden werden. Einerseits können die Feldgeräte vor Ort mittels Betätigung der vorgesehen Bedienelemente betätigt werden. Hierbei muss sich der Bediener am Feldgerät befinden oder zur entsprechenden Anlagefahren. Andererseits gehört die Fernbedienung von Feldgeräten aus Überwachungs- und Wartungszentralen zum bekannten Stand der Technik. Standard-Terminalprogramme, die hierbei zur Bedienung der Feldgeräte eingesetzt werden, stellen dem Bediener nur einen sehr geringen Komfort zur Verfügung und gestatten in der Regel nur einfache Bedienhandlungen. Insbesondere grafisch aufbereitete Informationen, beispielsweise Messdaten, lassen sich nicht für den Bediener darstellen. Es wurden deshalb komplexe Bedienprogramme für die Fernbedienung der Feldgeräte entwickelt. Solche komplexen Bedienprogramme müssen auf dem jeweiligen Feldgerät installiert werden und belegen so Speicherbereiche, die für die Geräteanwendung nicht mehr zur Verfügung stehen. Darüber hinaus benötigt jeder Bediener das für das jeweilige Feldgerät erforderliche Bedienprogramm. Bei Feldgeräten verschiedener Hersteller oder Feldgeräten des gleichen Herstellers mit unterschiedlichen Ausgabeständen können relativ schnell eine Vielzahl von Programmen oder Programmversionen benötigt werden.

Im Rahmen der Fernbedienung und -beobachtung sind zwischen den Feldgeräten und den vom Bediener genutzten Vorrichtungen einerseits Daten zu übertragen, die nur einmalig zur Verfügung zustellen sind. Darüber hinaus müssen von den Feldgeräten elektronische Daten an die vom Bediener genutzten Vorrichtungen übertragen werden, die nach kurzer Zeit nicht mehr aktuell sind und deshalb ständig aktualisiert werden müssen. Hierbei handelt es sich insbesondere um die in den Feldgeräten erfassten Messdaten, die zur Auswertung und/oder Ausgabe an die Benutzervorrichtungen übermittelt werden müssen.

Bei bekannten Bediensystemen sind die dem Bediener zur Verfügung stehenden Funktionen beschränkt. So ist es in einem Verbund aus mehreren Feldgeräten und mehreren von verschiedenen Bedienern genutzten Vorrichtungen zur Fernbedienung und - beobachtung nur möglich, dass zu einem Zeitpunkt mehrere Bediener mit ihren Bedien-Vorrichtungen nur auf ein und dasselbe Feldgerät zugreifen (vgl. beispielsweise "Mini-Sternkoppler", Siemens AG, Bestell-Nr. G34924-K2106-U1-A2).

Aus der Druckschrift WO 99/13388 ist ein Verfahren zum Bedienen und Beobachten eines Feldgerätes durch eine Nutzereinrichtung bekannt. Das Feldgerät und die Nutzereinrichtung sind über eine Proxy-Server-Einrichtung verbunden, über die sie elektronische Daten austauschen. Dabei werden die Daten zwischen der Proxy-Server-Einrichtung und der Nutzereinrichtung unter Verwendung des Protokolls HTTP ausgetauscht und die Daten zwischen der Proxy-Server-Einrichtung und dem Feldgerät unter Verwendung eines direkten (backplane) Anschlusses mit z. B. MODBUS als Kommunikationsprotokoll.

Aufgabe der Erfindung ist es, eine verbesserte Möglichkeit zum Bedienen und Beobachten bei der Fernbedienung von Feldge-räten zu schaffen, die für verschiedene Feldgerätetypen flexibel einsetzbar ist.

Die Aufgabe wird erfindungsgemäß durch das Verfahren nach Anspruch 1 sowie eine Vorrichtung nach Anspruch 8 gelöst.

Ein wesentlicher Gedanke der Erfindung betrifft das Vorsehen einer Proxy-Servereinrichtung zwischen Feldgeräten und Nutzereinrichtungen. Hierdurch ist es ermöglicht, dass zu einem Zeitpunkt mehrere Benutzer über eine jeweilige Benutzereinrichtung, insbesondere einen Personal-Computer, zum Bedienen und/oder zum Beobachten auf unterschiedliche Feldgeräte zugreifen. Dieses einen verbesserten Bedienkomfort und erweitert die Anwendungsmöglichkeiten für Bedien- und Beobachtungssysteme, da auf verschiedene Feldgeräte gleichzeitig zugegriffen werden kann.

Das Vorsehen der Proxy-Servereinrichtung ermöglicht die Auftrennung der zwischen den Feldgeräten und der(den) Nutzereinrichtungen auszutauschenden Daten in dynamische und statische Daten, die mit Hilfe der Proxy-Einrichtung auf der Basis jeweils geeigneter Protokolle übertragen werden können. Das Vorsehen einer Proxy-Servereinrichtung zwischen den Feldgeräten und einem Feldgerät oder einem Netzwerk aus mehreren Feldgeräten und deren Betreiben gemäß dem neuen Verfahren ermöglicht es, den zeitlichen und technischen Aufwand beim Übertragen der elektronischen Daten zu vermindern, so dass elektronische Leitungskapazitäten in einer.verbesserten Weise genutzt werden können.

Bei einer zweckmäßige Ausgestaltung der Erfindung ist vorgesehen, dass der erste Protokollstandard das HTTP-Protokoll ist, wodurch die Nutzung eines Standard-Protkolls ermöglicht ist, was einen weiten Verbreitungsgrad in Verbindung mit der Datenübertragung aufweist.

Eine vorteilhafte Weiterbildung der Erfindung sieht vor, dass mit Hilfe des zweiten Protokollstandards ein verbindungsloses Protokoll genutzt wird. Verbindungslose Protokolle gestatten einen ressourcenschonenden und schnellen Datenaustausch mit dem Feldgerät. Hierbei ist es notwendig, dass die Applikation des Feldgerätes die Verbindungssicherung für das verbindungslose Protokoll übernimmt.

Bei einer bevorzugten Fortbildung der Erfindung kann vorgesehen sein, dass die statischen Daten bei einem erstmaligen Aufruf durch die Nutzereinrichtung von dem Feldgerät an die Proxy-Servereinrichtung übertragen und in einer Speichereinrichtung der Proxy-Servereinrichtung gespeichert werden, so dass die statischen Daten für einen erneuten Abruf durch die Nutzereinrichtung in der Proxy-Servereinrichtung zur Verfügung stehen. Hierdurch ein wiederholtes Abrufen der statischen Daten von den Feldgeräten vermieden, so dass Leitungskapazität eingespart wird, die für andere Datenübertragungen genutzt werden kann.

Um die Aktualität zeitlich veränderlicher Daten, die in der Nutzereinrichtung für den Bediener ausgegeben werden, zu gewährleisten, sieht eine zweckmäßige Weiterbildung der Erfindung vor, dass die dynamischen Daten bei jedem Aufruf durch die Nutzereinrichtung von dem Feldgerät an die Proxy-Servereinrichtung und von der Proxy-Servereinrichtung an die Nutzereinrichtung übertragen werden.

Das Verfahren kann vorteilhaft zum Überwachen/Bedienen energietechnischer Anlagen verwendet werden, die häufig örtlich verstreut angeordnet sind.

Das Verfahren und/oder die Vorrichtung können vorteilhaft zum Überwachen energietechnischer Anlagen verwendet werden.

Die Erfindung wird im folgenden anhand von Ausführungsbeispielen unter Bezugnahme auf eine Zeichnung näher erläutert. Hierbei zeigen:
- Figur 1: eine schematische Darstellung mit einem Gerätenetzwerk und einem Firmen-Intranet, die über einen Proxyserver verbunden sind;
- Figur 2: eine Oberflächengestaltung einer Browser-Einrichtung mit grafischen Darstellungen für mehrere Feldgeräte;
- Figur 3: eine andere Oberflächengestaltung der Browser-Einrichtung mit einer grafischen Darstellung einer Frontansicht eines Feldgeräts;
- Figur 4: eine schematische Darstellung eines Feldgeräts und eines Nutzer-Personalcomputers;
- Figur 5: ein Ablaufdiagramm für ein Herunterladen von HTML-Seiten im Rahmen eines Beobachtungs- und Bediensystems;
- Figur 6: ein Blockdiagramm zum Erläutern eines RPC-Aufrufs;
- Figur 7: eine Darstellung der Anordnung mit dem Gerätenetzwerk und dem Firmen-Intranet nach Figur 1, wobei einzelne Elemente des Proxyservers schematisch gezeigt sind;
- Figur 8: eine schematische Blockdarstellung des Proxyservers;
- Figur 9: eine schematische Darstellung zur Erläuterung einer Client/Server-Interaktion;
- Figur 10: eine schematische Darstellung zur Erläuterung.einer Geräteerkennung in einer Master/Slave-Anordnung;
- Figur 11: ein Nassi-Sneider-Diagramm;
- Figur 12: eine schematische Baumdarstellung eines Verfahrens zur Geräteerkennung;
- Figur 13: eine schematische Darstellung einer Master/Slave-Anordnung zur Erläuterung einer Konfigurationsabfrage;
- Figur 14: ein schematische Blockdarstellung einer Gerätverwaltung im Proxyserver;
- Figur 15: eine schematische Blockdarstellung zur Erläuterung der funktionellen Einbindung eines XSL-Parsers in dem Proxyserver (XSL - "EXtended Stylesheet Language"); und
- Figur 16: eine schematische Blockdarstellung zur Erläuterung eines XSLT-Prozessors (XSLT - "EXtended Stylesheet Language Transformations").

Im folgenden wird ein in Verbindung mit Feldgeräten nutzbares sogenanntes Beobachtungs- und Bediensystem (BuB-System) beschrieben.

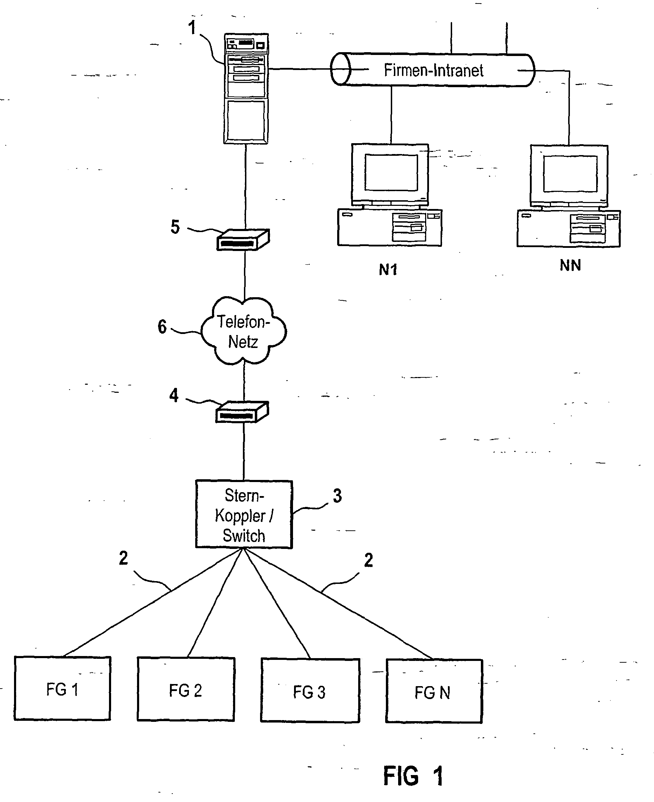

Figur 1 zeigt eine schematische Architektur von zwei Netzwerken, ein Gerätenetzwerk mit mehreren Feldgeräten FG1...FGN und ein Firmen-Intranet mit mehreren Nutzereinrichtungen N1...NN, vorzugsweise Personalcomputer (PC). Das Gerätenetzwerk und das Firmen-Intranet sind über einen Proxyserver 1 verbunden. Der Proxyserver 1 ist Bestandteil des Beobachtungs- und Bediensystems und dient als ein Gateway zwischen dem Gerätenetzwerk und dem Firmen-Intranet. Mit Hilfe des BuB-Systems werden einerseits Informationen, beispielsweise Mess- und/oder Zustandsdaten, von den Feldgeräten FG1...FGN erfasst und an die Nutzereinrichtungen N1...NN übermittelt, um einen Benutzer der Nutzereinrichtungen N1...NN über den Betriebszustand der Feldgeräte FG1...FGN zu informieren. Andererseits dient das BuB-Systems zum Erfassen von Bedien-bzw. Steuereingaben des Benutzers mit Hilfe der Nutzereinrichtungen N1...NN und zum Umsetzen der Eingaben des Benutzers in den Feldgeräten FG1...FGN. Bei den Feldgeräten FG1...FGN kann es sich um beliebige Geräte zum Beobachten, zum Messen, zum Steuern und/oder zum Regeln verschiedenster physikalischer Größen in unterschiedlichen technischen Prozessen handeln, beispielsweise zum Überwachen und/oder Steuern energietechnischer Anlagen, beispielsweise eines Umspannwerks.

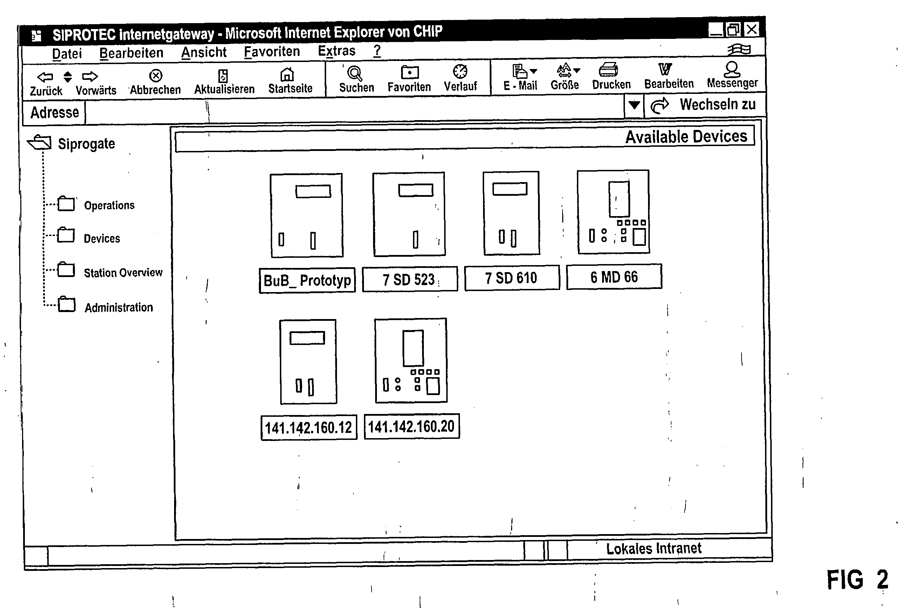

Das Gerätenetzwerk umfasst einzelne PPP-Verbindungen 2 (PPP - "Point to Point Protocol"), die über einen Sternkoppler 3 mit dem Proxyserver 1 verbindbar sind, oder ein separates Ethernet-Segment. Der Proxyserver 1 stellt eine eigene Homepage in Form von HTML-Daten (HTML - "HyperText Markup Language") zur Verfügung, die eine Übersicht über die in-dem Gerätenetzwerk erreichbaren Feldgeräte FG1...FGN zeigt (vgl. Figur 2); die Homepage kann mit Hilfe eines Standard-Browsers in den Nutzereinrichtungen N1...NN dargestellt werden.

Gemäß Figur 1 sind die Feldgeräte FG1...FGN nur mit dem Sternkoppler 3 und einem daran angeschlossenen Modem 4 ausgestattet. In diesem Fall sind die Feldgeräte FG1...FGN über eine asynchrone serielle Schnittstelle direkt über den Sternkoppler 3 mit dem Modem 4 verbunden. Es sind verschiedene Formen der Ankopplung über aktive und passive Sternkoppler mögliche Als Protokoll für den Zugriff auf die Feldgeräte FG1 ... FGN wird ein IP-Protokoll (IP - "Internet Protocol") über eine PPP-Linkschicht verwendet.

Wenn die Feldgeräte FG1...FGN mit einem Ethernet-Anschluss ausgestattet sind, sind die Ethernet-Anschlüsse mit einem Switch oder einem Hub verbunden. Besitzt dieser Switch oder dieser Hub neben Ethernet-Ports auch einen PPP-Port, dann spricht man von einem Router. Dieser PPP-Port kann dann ebenfalls direkt mit dem Modem 4 verbunden werden.

Im Firmen-Tntranet haben die an das lokale Netz angeschlossenen Nutzereinrichtungen N1...NN Zugang zu einem Modem 5, welches über ein Telekommunikationsnetz 6, beispielsweise ein Telefonnetz auf Basis eines ISDN- oder eines Mobilfunk-Netzes, mit dem Modem 4 des Gerätenetzwerk verbindbar ist. Wird in den Nutzereinrichtungen N1...NN jeweils eine DFÜ-Verbindung (DFÜ - Datenfernübertragung) eingerichtet, kann von den Nutzereinrichtungen N1...NN aus jeweils ein Zugriff auf die Feldgeräte FG1...FGN erfolgen. Wird nun der Proxyserver 1 von den Nutzereinrichtungen N1...NN angesprochen, kann von jeder der an das Firmen-Intranet angeschlossenen Nutzereinrichtungen N1...NN auf die Feldgeräte FG1...FGN zum Beobachten und Bedienen zugegriffen werden. Der Proxyserver 1 "spiegelt" alle Feldgeräte FG1...FGN, d.h. Informationen über die Feldgeräte FG1...FGN, ins Firmen-Intranet. Dazu werden vom Proxyserver 1 die folgenden Protokolle verarbeitet: HTTP-Protokoll (HTTP - "Hypertext Transfer Protocol" und RPC-Protokoll_(RPC - "Remote Procedure Call"). Das HTTP-Protokoll dient zur Übertragung statischer Daten. Hierbei handelt es sich um Daten, die nur einmalig an den Proxyserver 1 übertragen werden und anschließend dort in einem Dateispeicher für spätere Abrufe durch die Nutzereinrichtungen N1...NN abgelegt werden. Das RPC-Protokoll, welches ebenfalls ein IP-basiertes Protokoll ist, wird zum Übertragen dynamischer Daten genutzt. Bei den dynamischen Daten handelt es sich insbesondere um in den Feldgeräten FG1...FGN erfasste Messwerte und/oder Ereignislisten, betreffend Informationen über Ereignisse in den Feldgeräten FG1...FGN.

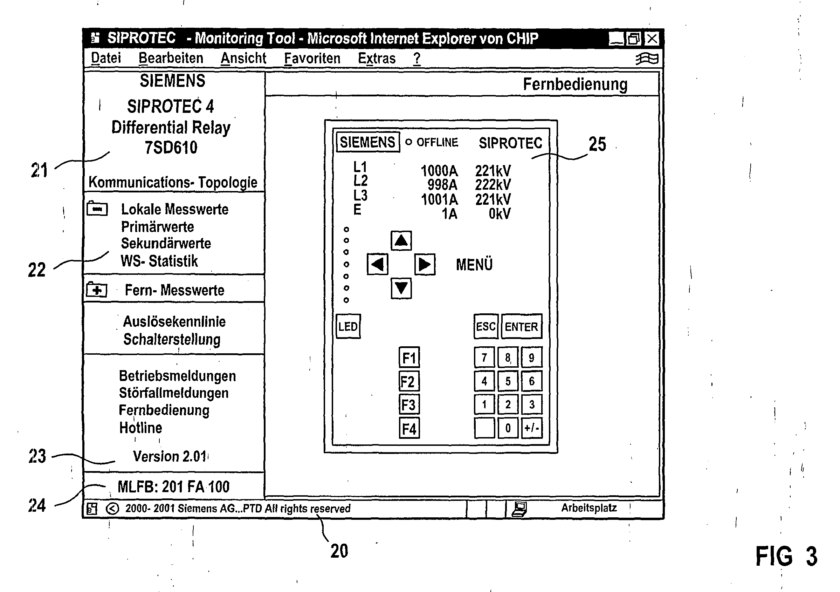

Das HTTP-Protokoll gestattet den Nutzereinrichtungen N1...NN den Zugriff auf die Feldgeräte FG1...FGN. Bei einem Zugriff im Rahmen des BuB-Systems werden zunächst mittels der Anwahl der zugehörigen IP-Adresse des zu bedienenden/beobachtenden Feldgeräts HTML-Daten von dem Feldgerät an die in diesem Anwendungsfall genutzte Nutzereinrichtung übermittelt, wobei die HTML-Daten Daten umfassen, mit deren Hilfe in der Browser-Einrichtung der abrufenden Nutzereinrichtung eine Darstellung des Feldgeräts erzeugt werden kann, wie dies beispielhaft in Figur 3 dargestellt ist. Der Abruf der HTML-Daten zum Erzeugen der Darstellung gemäß Figur 3 kann mit Hilfe einer Auswahl eines der in Figur 2 in der Übersicht dargestellten Feldgeräte durch den Benutzer ausgelöst werden, beispielsweise mittels der Betätigung einer Maus oder einer Tastatur der Nutzereinrichtung.

Gemäß Figur 3 sind auf der Oberfläche 20 der Browser-Einrichtung die folgenden Informationen dargestellt (vgl. linke Seite in Figur 3): Feldgerätefamilie (z.B. SIPROTEC4), Feldgeräteart und Feldgerätetyp 21, ein Bedienbaum 22, die Version des BuB-Tools 23 (Version und Datum) und Angaben zur Verbindung 24 mit dem Feldgerät (MLFB - "Maschinenlesbare Fabrikationsbezeichnung", BF-Nummer, Verbindungsstatus und IP-Adresse). Auf der Oberfläche ist weiterhin die einem Link bzw. Zweig im Bedienbaum 22 zugeordnete HTML-Seite 25 angezeigt. In Abhängigkeit von dem im Bedienbaum 22 ausgewählten Link wird die zugehörige HTML-Seite 25 auf der Oberfläche 20 der Browser-Einrichtung dargestellt. -

Die in den Feldgeräten FG1...FGN abgelegten HTML-Seiten, d.h. auch die zur Erzeugung der in Figur 3 gezeigten Darstellung genutzte HTML-Seite 25, können Java-Code umfassen, der die Browser-Einrichtung der jeweiligen Nutzereinrichtung N1...NN dazu veranlasst, parallel zu der bestehenden HTTP-Verbindung zur Darstellung der aus den Feldgeräten FG1...FGN geladenen HTML-Seite eine weitere Verbindung mit den Feldgeräten FG1...FGN aufzubauen. Diese zweite Verbindung benutzt das RPC-Protokoll, um dynamische Daten, wie Ereignislisten oder Messwerte, aus den Feldgeräten FG1...FGN besonders schnell und effektiv für die Darstellung in den Nutzereinrichtungen N1...NN innerhalb einer angewählten HTML-Seite, beispielsweise der in Figur 3 gezeigten HTML-Seite 25, zu übertragen.

### Informationsabruf aus den Feldgeräten

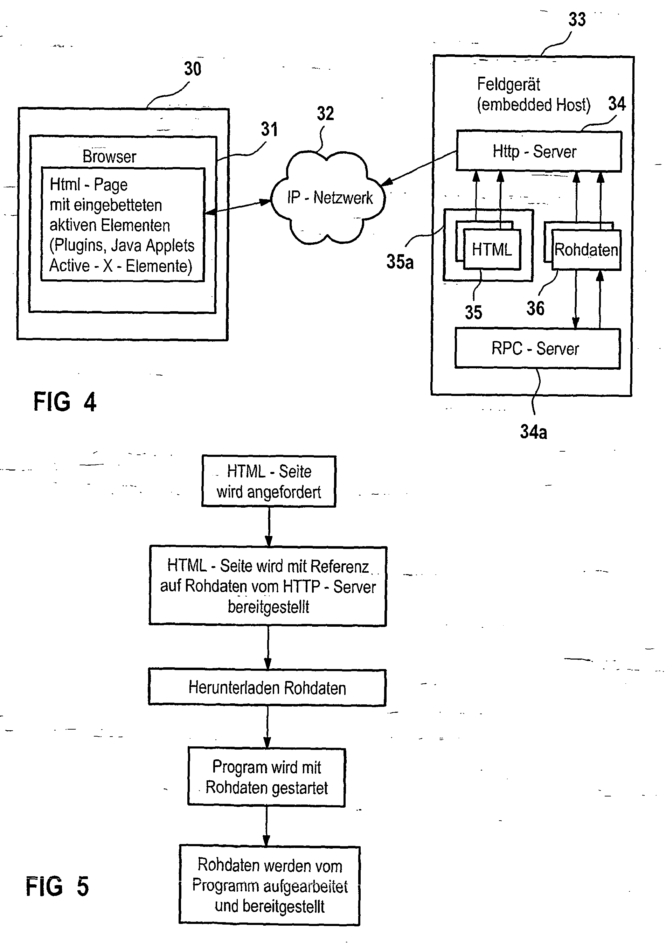

Figur 4 zeigt eine schematische Darstellung zur näheren Erläuterung des Abrufens der Informationen im Rahmen des BuB-Systems von den Feldgeräten FG1...FGN in die Nutzereinrichtungen N1...NN.

Gemäß Figur 4 ist auf einem Nutzer-Personalcomputer 30, der eine beispielhafte Ausbildung der Nutzereinrichtungen N1...NN darstellt, eine Browser-Einrichtung 31 installiert. Der Nutzer-Personalcomputer-30 ist über ein IP-Netzwerk 32, welches den Proxyserver 1, den Sternkoppler 3, das Modem 4, das Modem 5 sowie das Telekommunikationsnetzwerk 6 umfassen kann, mit einem Feldgerät 33 verbunden. Das Feldgerät 33 weist einen HTTP-Server 34 auf. In dem Feldgerät 33 sind HTML-Seiten 35 gespeichert, die für dieses Feldgerät 33 spezifische Informationen umfassen. Die HTML-Seiten 35 enthalten beispielsweise eine HTML-Darstellung der Frontansicht des Feldgeräts 33. Die HTML-Seiten 35 sind speziell auf das Feldgerät 33 abgestimmt und können mittels eines HTTP-Herunterladens vom HTTP-Server 34 des Feldgeräts 33 durch den Nutzer-Personalcomputer 30 abgerufen werden. Die Anforderung der HTML-Seiten 35 aus dem Feldgerät 33 kann mittels der Eingabe einer URL (URL - "Uniform Resource Locator") in der Browser-Einrichtung 31 oder mittels der Referenz aus einer anderen HTML-Seite heraus ("Link") ausgelöst werden. Neben den HTML-Seiten 35 werden vom Feldgerät 33 eine Reihe von Rohdaten 36 (Messwerte, Parameter, etc.) in Form von Dateien bereitgestellt. In den HTML-Seiten 35 befinden sich Referenzen auf die im Feldgerät 33 verfügbaren Rohdaten 36. Sollen die Rohdaten 36 ausgewertet oder in sonstiger Weise verändert werden, wird ein Programm benötigt, welches nach bestimmten Algorithmen hochwertige Datenformate erzeugen kann. Diese Datenformate können dann von dem Programm beispielsweise zur Bildschirmanzeige in Verbindung mit Analysemöglichkeiten verwendet werden. Die hierfür notwendige Rechenleistung steht in dem Feldgerät 33 in der Regel nicht zur Verfügung. Mit Hilfe der Browser-Einrichtung 31 besteht für den Anwender die Möglichkeit, unter Nutzung des IP-Netzwerks 32 über Kommunikationsverbindungen (Modem, Telefonnetze, LAN - "Local Area Network", WAN - "Wide Area Network") auf die HTML-Seiten 35 aus dem Feldgerät 33 und damit auch auf die hierin referenzierten Rohdaten 36 des Feldgeräts 33 zuzugreifen. Gemäß Figur 5 wird (werden) zu diesem Zweck mit Hilfe der Browser-Einrichtung 31 zunächst die HTML-Seite(n) 35 von dem Nutzer-Personalcomputer 30 angefordert. Nachdem der HTTP-Server 34 des Feldgeräts 33 die HTML-Seite(n) 35, einschließlich der hierin enthaltenen Referenzen auf die Rohdaten 36, bereitgestellt hat, werden die HTML-Seite 35 und die Rohdaten 36 an den Nutzer-Personalcomputer 30 übertragen. Hierbei werden die HTML-Seite 35 und die Rohdaten 36 mittels getrennter Protokolle zwischen dem Feldgerät 33 und dem Nutzer-Personalcomputer 30 übertragen, vorzugsweise HTTP-bzw. RPC-Protokoll. In dem Nutzer-Personalcomputer 30 können die Rohdaten 36 dann mit geeigneten Programmen verarbeitet werden. Zum Ausführen des RPC-Protokolls umfasst das Feldgerät 33 zusätzlich einen RPC-Server 34a.

Beim Herunterladen der HTML-Seite 35 vom HTTP-Server 34 können die referenzierten Dateien der Rohdaten 36 automatisch mit geladen werden. Der Aufruf aus der HTML-Seite 35 kann wie folgt aussehen: <EMBED SRC="rawdata.ext">. Mit dem Parameter "SRC" wird die Datei mit den Rohdaten 36 des Feldgeräts 33 referenziert. Außerdem kann das Herunterladen der Rohdaten 36 auch über einen vom Benutzer zu aktivierenden Link auf der-HTML-Seite 35 ausgelöst werden. Für diesen Fall könnte der Aufruf in der HTML-Seite 35 wie folgt aussehen: <a href="rawdata.ext" type="mime type">link</a>.

Damit die Browser-Einrichtung 31 das richtige Programm zur Weiterverarbeitung der Rohdaten 36 starten kann, muss der Browser-Einrichtung 31 der Inhaltstyp der Rohdaten 36 mitgeteilt werden. Hierfür gibt es je nach verwendetem Betriebssystem des Nutzer-Personalcomputers 30 und genutzter Browser-Einrichtung 31 unterschiedliche Vorgehensweisen.-Es kann sowohl die Dateierweiterung (beispielsweise "*.ext") als auch der vom HTTP-Server 34 mitgelieferte MIME-Typ (MIME - "Multipurpose Internet Mail Extension") ausgewertet werden. Das von der Browser-Einrichtung 31 gestartete Programm zur Rohdatenverarbeitung übernimmt die Konvertierung der heruntergeladenen Rohdaten 36. Das Programm zur Rohdatenverarbeitung kann als Browser-PlugIn, als ActiveX-Komponente oder als externes Programm realisiert werden.

Hierbei ist zwischen verschiedenen Typen von Rohdaten zu unterscheiden. Die Verarbeitung von sporadisch entstehenden Rohdaten 36 wird vorzugsweise mit Hilfe eines Browser-PlugIn's oder einer Active X-Komponente vorgenommen. In diesem Zusammenhang erfolgt der Zugriff auf die Daten mit Hilfe des TCP-Protokolls. Sollen sich ständig aktualisierende Rohdaten 36 in Form eines Endlos-Datenstroms verarbeitet werden, dann ist es sinnvoll, ein effektiveres Protokoll für die Übertragung an den Nutzer-Personalcomputer 30 (den Nutzereinrichtungen N1..NN) zu verwenden. Mit Hilfe des zusätzlichen RPC-Protokolls wird_eine Auftrennung der in den Nutzereinrichtungen N1...NN (bzw. dem Nutzer-Personalcomputer 30) darzustellenden Informationen über das (die) Feldgerät (e) FG1...FGN bzw. 33 in statische und dynamische Informationen ermöglicht. Die statischen Informationen werden mit dem HTTP-Standardprotokoll übertragen, während die dynamischen, also veränderlichen Daten über das effektivere RPC-Protokoll übertragen werden. Der Aufwand, der beim Senden der dynamischen Daten mittels des HTTP-Protokolls durch Verbindungsaufbau/abbau und Verbindungsüberwachung entstehen würde, würde den des ereignisabhängigen, wiederholten Sendens der dynamischen Daten mittels des RPC-Protokolls übersteigen. Da in der Regel nur wenige Daten schnell übermittelt werden sollen (Messwerte, Meldelisten, ...), ist der Einsatz eines verbindungslosen Protokolls, insbesondere des RPC-Protokolls, für die dynamischen Daten vorteilhaft. Bei einem Aufruf entfernter Prozeduren (RPC - "Remote Procedure Call") ruft ein lokales Programm eine Prozedur auf einem entfernten System auf. Das Konzept des entfernten Prozeduraufrufs sorgt dafür, dass der gesamte Netzcode in der RPC-Schnittstelle und in den Netzroutinen verborgen bleibt. Damit wird vermieden, dass sich die Applikationsprogramme (Client und Server) um Details, wie z.B. Konvertierung EBCDIC <---> ASCII, Zahlenkonvertierung, Socket, Session etc., kümmern müssen. Ein Ziel von RPC ist die Vereinfachung der Implementierung von verteilten Anwendungen. UDP (UDP - "User Defined Protocol") wird von einigen Anwendungen, die nur kurze Nachrichten senden und diese wiederholen können, verwendet. UDP ist daher ein ideales Protokoll zur Verteilung von Informationen, die sich ständig ändern, wie beispielsweise Börsenkurse. Statt die Daten in ein TCP-Umschlag zu packen und dann in den IP-Umschlag, wandern sie jetzt in einen UDP-Umschlag, bevor sie in den IP-Umschlag kommen. Obwohl UDP in der gleichen Schicht wie das verbindungsorientierte TCP beheimatet ist, handelt es sich um ein verbindungsloses Protokoll. Der Einsatz des UDP Protokolls erscheint immer dann sinnvoll, wenn nur wenige Daten schnell übermittelt werden sollen. So gibt es in Anwendungsprogrammen zwischen Client und Server einen Austausch von kurzen Anfragen und Antworten. Hier würde der Aufwand der durch Verbindungsaufbau/ -abbau und Verbindungsüberwachung entsteht, den des erneuten Sendens der Daten übersteigen. Das getrennte Übertragen von statischen und dynamischen Daten zwischen den Feldgeräten FG1...FGN im Gerätenetzwerk und den Nutzereinrichtungen N1...NN im Firmen-Intranet mit Hilfe unterschiedlicher Protokolle wird durch das Vorsehen und die spezifische Ausbildung des später im Detail beschriebenen Proxyservers 1 optimiert.

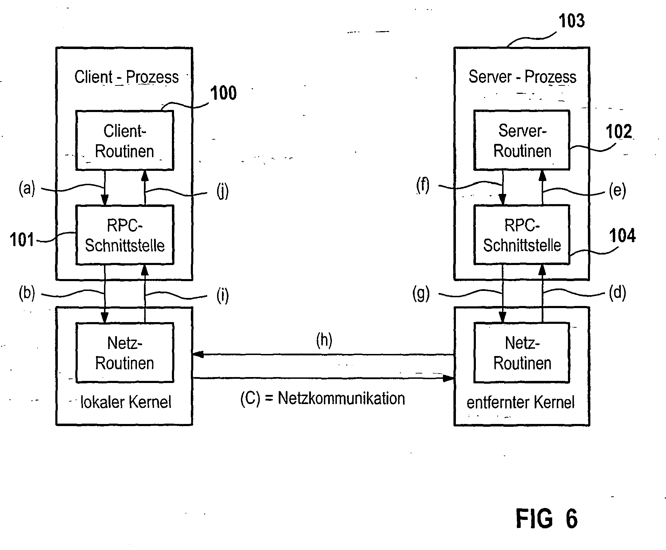

Im folgenden wird die Nutzung des RPC-Protokolls zum Abrufen der dynamischen Daten in einer Client/Server-Anordnung (Nutzereinrichtungen N1...NN/Feldgeräte FG1...FGN) anhand der schematischen Darstellung in Figur 6 beschrieben.

Ein RPC-Aufruf läuft beispielsweise wie folgt ab:
(a) Ein innerhalb des Brwosers 31 (vgl. Figur 4) ablaufender Client-Prozess 100 ruft eine RPC-Schnittstelle 101 auf. Dieser Client-Prozess 100 kann z.B. ein in eine HTML-Seite eingebettetes Java-Applet sein. Die RPC-Schnittstelle 101 hat die Aufgabe, den Unterprogrammeinsprung zu spezifizieren. Die Spezifikation enthält den Namen der Funktion sowie Anzahl und Typen der Parameter. Hiermit wird ein logischer Einsprung definiert. Die RPC-Schnittstelle 101 ermöglicht das Starten der entfernt liegenden Prozedur 102.
(b) Die Parameter des Client-Prozesses 100 werden von der RPC-Schnittstelle 101 gelesen. Der Zweck der RPC-Schnittstelle 101 liegt in der Verpackung und Konvertierung der Parameter für das Serverprogramm.
(c) Die Netzroutinen versenden die Nachrichten an einen Server-Prozess 103, der im RPC-Server 34a abläuft.
(d) Eine RPC-Schnittstelle 104 des Server-Prozess 103 baut die Parameter aus den Nachrichtenpaketen wieder auf.
(e) Im nächsten Schritt wird das Serverprogramm aufgerufen. Dazu wird ein Serverstub definiert. Dieser Stub ist der eigentliche Einsprung in die auf dem Server-Prozess 103 liegende Prozedur.
(f) Nach Abarbeitung der Prozedur wird die Kontrolle wieder an die RPC-Schnittstelle 104 gegeben.
(g) Die Schnittstelle 104 verpackt die Rückgabeparameter und transportiert die Daten anschließend zu den Netzroutinen.
(h) Die Netzroutinen transportieren die Daten über netzwerkabhängige Aufrufe auf den Client-Prozess 100.
(i) Die RPC-Schnittstelle 101 des Client-Prozesses 100 entpackt die Parameter und versorgt die angegebenen Parameter mit den neuen Daten.
(j) Die Kontrolle wird an den Client-Prozess 100 zurückgegeben, der die erhaltenen Daten weiterverarbeiten kann.

Das Konzept des entfernten Prozeduraufrufs sorgt dafür, dass der gesamte Netzcode in der RPC-Schnittstelle und in den Netzroutinen verborgen bleibt. Damit wird vermieden, dass sich die Applikationsprogramme (Client und Server) um Details, wie z.B. Konvertierung EBCDIC <---> ASCII, Zahlenkonvertierung, Socket, Session etc., kümmern müssen. Ein Vorteil der Nutzung des RPC-Protokolls für die dynamischen Daten ist die Vereinfachung der Implementierung von verteilten Anwendungen.

### Bedienen der Feldgeräte

Der in Verbindung mit Figur 4 beschriebene Abruf von Information von dem Feldgerät 33, welches den HTTP-Server 34 umfasst, kann auch in Verbindung mit Handlungen im Rahmen des Beobachtungs- und Bediensystem genutzt werden, die zum Zweck des Bedienens des Feldgeräts 33 ausgeführt werden. Hierdurch ist es ermöglicht, das Feldgerät 33 mit Hilfe der Browser-Einrichtung 31 zu bedienen. Dieses wird im folgenden näher beschrieben.

Das Feldgerät 33 enthält-eine Speichereinrichtung 35a, in welcher Bediensoftware in Form von HTML-Seiten 35 gespeichert ist, und ein Java-Archiv oder Daten, aus denen HTML-Seiten erzeugbar sind. Die Bediensoftware ist speziell auf das Feldgerät 33 zugeschnitten. Mittels der Eingabe der URL-Adresse des Feldgeräts 33 durch den Nutzer startet ein HTTP-Herunterladen, was zum Herunterladen der Bediensoftware vom HTTP-Server 34 des Feldgeräts 33 in den Nutzer-Personalcomputer 30 führt. Nach dem Herunterladen der Bediensoftware von dem Feldgerät 33 auf den Benutzer-Personalcomputer 30 in Form der HTML-Seite(n) 35 wird die Vorderansicht des Feldgeräts 33 mit allen Bedien- und Anzeige-Elementen innerhalb der Browser-Einrichtung dargestellt (vgl. Figur 3). Der Benutzer kann dann bestimmte Bedienfunktionen des Feldgeräts 33 mit Hilfe eines Mausklicks auf dem Bildschirm des Benutzer-Personalcomputers 30 auslösen. Die Übermittlung der Benutzerhandlung zum Feldgerät 33 erfolgt mittels eines schnellen und effektiven Protokolls, das einerseits die genannten Bedienanforderungen vom Benutzer-Personalcomputer 30-zum Feldgerät 33 überträgt und andererseits Reaktionen des Feldgeräts 33 zurückliest. Zu diesem Zweck werden die internen Bedien- und Anzeigefunktionen des Feldgeräts 33 zur Schnittstelle der Browser-Einrichtung 31 hin veröffentlicht, z.B. Tastaturpuffer, Displaypuffer, LED-Status.

Im Rahmen der Bedienung durch den Benutzer gibt es zwischen Benutzer-Personalcomputer 30 und dem Feldgerät 33 einen Austausch von kurzen Anfragen und Antworten im Rahmen einer Client-Server-Verhältnisses. Hierbei würde der Aufwand, der im Zusammenhang mit dem Aufbau/Abbau und der Überwachung der HTTP-Verbindung zwischen dem Benutzer-Personalcomputer 30 und dem Feldgerät 33 entsteht, den Aufwand übersteigen, der beim erneuten Senden und Empfangen der Daten gemäß eines verbindungslosen Protokolls entsteht. Da in der Regel nur wenige Daten schnell übermittelt werden sollen (z.B. Tastendruck, Displayinhalt, LED-Status), ist der Einsatz eines schnellen, effektiven, verbindungslosen Protokolls sinnvoll, beispielsweise des oben beschriebenen RPC-Protokolls. Zur Reduktion der ausgetauschten Datenmenge (z.B. Displayinhalt) zwischen dem Benutzer-Personalcomputer 30 und dem Feldgerät 33 werden Verfahren zur Komprimierung von Daten eingesetzt.

Internet-Protokolle, wie TCP/IP und HTTP, bieten keinerlei Sicherheitsmechanismen. Es sind zusätzliche Protokolle notwendig, um eine sichere Kommunikation zu ermöglichen. Die Mechanismen zum Schutz sicherheitsrelevanter Aktionen am Feldgerät 33 über TCP/IP-Kommunikation sind von besonderer Bedeutung. Hinsichtlich des Schutzes gegen unbefugte Zugriffe lassen sich die Bedienhandlungen am Feldgerät 33 klassifizieren (vgl. Tabelle 1).

**Tabelle 1**

| Aktion | Sicherheits-Risiko | Maßnahmen |
|---|---|---|
| Messwerte lesen; Meldungslisten lesen | Gering - beim Mitlesen des RPC-Datenverkehrs können Informationen zur Betriebsführung (Betriebsmesswerte, Meldungen, Störfälle) im Umfang der auf den HTML-Seiten angezeigten Daten eingesehen werden | Es wird ein internes UDP-Protokoll (UDP-"User Defined Protocol") verwendet. Da dieses Protokoll nur dem Hersteller bekannt ist, ist fürdas Entschlüsseln der Inhalte ein Re-Engineering notwendig |
| Gerät umparametrieren | Hoch - diese Aktionen sind am Gerät passwortgesichert | Optionale Verschlüsselung der sehr kurzen Protokolle (aufwändig) |
| Schalten, Steuern, Puffer löschen | Sehr hoch - die Protokolle können aufgezeichnet und später wiederholt werden | 128-Bit-Verschlüsselung passwortgesicherter Aktionen |

Missbräuchliche Handlungen beim Bedienen des Feldgeräts 33 können mittels der folgenden Maßnahmen im wesentlichen ausgeschlossen werden:
- Mit Hilfe einer Firewall (z.B. Proxyserver) kann das interne Netz (Firmen-Intranet/LAN) eine geschützte Verbindung mit einem anderen Netz (z.B. Internet) aufnehmen.
- Das Feldgerät 33 ist im Lieferzustand so eingestellt, dass Tasten, die die vollständige Eingabe von Kundenpasswörtern ermöglichen, gesperrt sind. Diese Sperre muss vom Kunden am Feldgerät 33 selbst bzw. mit dem Bedienprogramm in der Browser-Einrichtung 31 auf dem Nutzer-Personalcomputer 30 aufgehoben werden (Passworteingabe erforderlich). Im Lieferzustand sind damit nur einfache Bedienhandlungen über die Browser-Einrichtung 31 möglich: Navigation im Bedienmenü, Anzeige von Messwerten, Parametern und Meldungslisten.
- Die Parametrierung des Feldgeräts 33 in der Frontansicht-Emulation ist mit Kenntnis der Passwörter wie am Feldgerät 33 möglich, wenn die Sperrung der dazu benötigten Tasten gelöst ist.
- Sicherheitsrelevante Aktionen am Feldgerät 33 (Schalten, Steuern, Löschen von Puffern, ...) werden durch Authentifikationsprotokolle geschützt, z.B. mittels Hash-Funktion und eines vom Feldgerät 33 generierten Schlüssels. Damit können aus dem Verbindungsprotokoll keine Rückschlüsse auf eingegebene Passwörter erfolgen. Mit diesem Verfahren wird aus einer beliebig langen Nachricht eine 128 Bit lange Information, der sogenannte "Message Digest", gebildet, der an die originäre Nachricht angehangen wird. Der Empfänger (Feldgerät 33) vergleicht den "Message Digest" mit dem vom Feldgerät 33 aus der Information ermittelten. Dadurch werden Feldgerätepasswörter nicht über die Kommunikationsverbindung übertragen.
- Die im Feldgerät 33 generierten Schlüssel verfallen nach kurzer Zeit und können nur einmal für eine Übertragung verwendet werden. Damit ist die Aufzeichnung von sicherheitsrelevanten Protokollen und eine spätere Wiederholung dieser aufgezeichneten Protokolle wirkungslos.

### Proxyserver

Ein Element zur optimierten Umsetzung des beschriebenen funktionellen Zusammenwirkens der Elemente des Beobachtungs- und Bediensystems, beispielsweise der Nutzung des RPC-Protokolls, des Abrufs der Rohdaten aus den Feldgeräten FG1...FGN und der Bedienung der Feldgeräte mittels Browser auf den Nutzereinrichtungen N1...NN, ist der Proxyserver 1. Bekannte Standard-HTTP-Proxyserver unterstützen ausschließlich das HTTP-Protokoll und sind somit nicht in der Lage, als Gateway zwischen dem Gerätenetzwerk und dem Firmen-Intranet zu dienen. Aus diesem Grund wurde ein spezifischer, für das BuB-System konzipierter Proxyserver 1 geschaffen, der beide von den Feldgeräten FG1...FGN verwendeten Protokolle (HTTP, RPC) unterstützt.

Ein wesentlicher Vorteil, der bei der Nutzung des Proxyservers 1 gegenüber der Ankopplung des Gerätenetzwerks an das Firmen-Intranet mittels Routers oder, wenn keine WAN-Verbindung (WAN - "Wide Area Network") zwischen dem Gerätenetzwerk und dem Intranet besteht, einer direkten Ankopplung des Geräte-Netzsegments über einen Hub oder einen Switch besteht in der Nutzung des sogenannten "Cachings".

Das diesem Verfahren ("Caching") zugrunde liegende Prinzip wird im folgenden allgemein, ohne Bezugnahme auf die oben genannten Figuren, kurz beschrieben.

Stellt ein Client eine Anfrage nach einem Objekt an eine Servereinrichtung, so läuft diese Anfrage zunächst über eine sogenannte Proxy-Einrichtung. Die Proxy-Einrichtung schaut nach, ob sich das betreffende Objekt bereits in einem lokalen Speicher (Cache) der Proxy-Einrichtung befindet, welcher in der Regel auf einer Festplatte ausgebildet ist. Wird hierbei festgestellt, dass das Objekt nicht lokal im Speicher vorliegt, reicht die Proxy-Einrichtung die Anfrage weiter zu einer eigentlichen Zielserver-Einrichtung. Von dort erhält die Proxy-Einrichtung das Objekt und speichert eine Kopie des Objekts für weitere Anfragen nach diesem Objekt in dem lokalen Speicher, bevor die Proxy-Einrichtung das Objekt an den anfragenden Client weitergibt. Wird das Objekt jedoch im lokalen Speicher der Proxy-Einrichtung gefunden, so wird die Anfrage des Clients nicht an die Zielserver-Einrichtung durchgestellt, sondern der Client bekommt das gewünschte Objekt direkt von der Proxy-Einrichtung übermittelt. Voraussetzung für optimales Ausführen des beschriebenen Verfahrens ist ein genügend großer Speicher-Bereich in der Proxy-Einrichtung, d.h. in der Größenordnung von mehreren Hundert MB bis mehreren GByte. Ansonsten läuft der lokale Speicher in der Proxy-Einrichtung über und es muss ein "Garbage Collector" (ein sogenannter Aufräumdienst) gestartet werden, der veraltete Objekte aus dem Speicher heraus filtert, um dort Platz für neue Objekte zu schaffen.

Vorteile des beschriebenen Verfahrens ("Caching") sind: eine Verbesserung der Leistungsfähigkeit (schnellerer Datentransport als extern); eine Einsparung von externer Bandbreite (mehr Platz für andere Dienste bleibt frei); eine Verminderung der Antwortzeiten
Entlastung der Zielserver-Einrichtung; beim Transport des Objekts von der Proxy-Einrichtung zum Client entstehen keine bzw. geringere Übertragungskosten; und die Trefferquoten im lokalen Speicher der Proxy-Einrichtung können je nach Nutzung sehr hoch sein.

Der zum Verbinden des Gerätenetzwerks und des Firmen-Intranets (vgl. Figur 1) genutzte Proxyserver 1 basiert auf dem beschriebenen Grundprinzip und hat aufgrund der spezifischen Ausbildung, welche im Detail später beschrieben wird, darüber hinaus die im folgenden genannten Vorteile.

Durch den Einsatz des Proxyservers 1 (vgl. Figur 1) ergeben sich deutliche Geschwindigkeitsvorteile beim Zugriff auf das Gerätenetzwerk. Der Proxyserver 1 umfasst einen für die Anwendung im BuB-System optimierten Dateispeicher bzw. Dateicache, der alle aus den Feldgeräten FG1...FGN abgerufenen Dateien mit statischen Daten im Proxyserver 1 puffert. Wird auf eine solche Datei das erste Mal zugegriffen, dann muss diese Datei direkt aus einem der Feldgeräte FG1...FGN geholt werden. Bei einem wiederholten Zugriff auf diese Datei kann diese dann jedoch direkt aus dem Dateicache des Proxyservers 1 geliefert werden. Da das lokale Firmen-Intranet im allgemeinen viel schneller als eine Modemverbindung zu den Feldgeräten FG1...FGN ist, ergeben sich hier signifikante Geschwindigkeitsvorteile beim Zugriff auf das Gerätenetzwerk, da im laufenden Betrieb nur noch die gegenüber den HTML-Seiten und den Java-Archiven deutlich kleineren dynamischen Daten über die langsame Modemverbindung übertragen werden.

Der Proxyserver 1 erhöht darüber hinaus die Sicherheit im Netzwerk. Der Proxyserver 1 schottet die beiden Netzwerke, Gerätenetzwerk und Firmen-Intranet, gegeneinander ab und überträgt nur die im Proxyserver 1 verarbeiteten Protokolle. Dies bedeutet, dass aus dem Firmen-Intranet nur die von einem Browser auf den Nutzereinrichtungen N1...NN an die Feldgeräte FG1...FGN generierten Anforderungen übertragen werden. In die Gegenrichtung werden nur die von den Feldgeräten FG1...FGN generierten Antworten übertragen. Damit werden alle anderen im Firmen-Intranet kursierenden Datenpakete vom Gerätenetzwerk ferngehalten und beeinflussen somit nicht den Durchsatz im Gerätenetzwerk. Des weiteren kann ein im Gerätenetzwerk auftretendes, hohes Datenaufkommen aufgrund von Querkommunikation zwischen den Feldgeräten FG1...FGN die Netzlast im Firmen-Intranet nicht erhöhen.

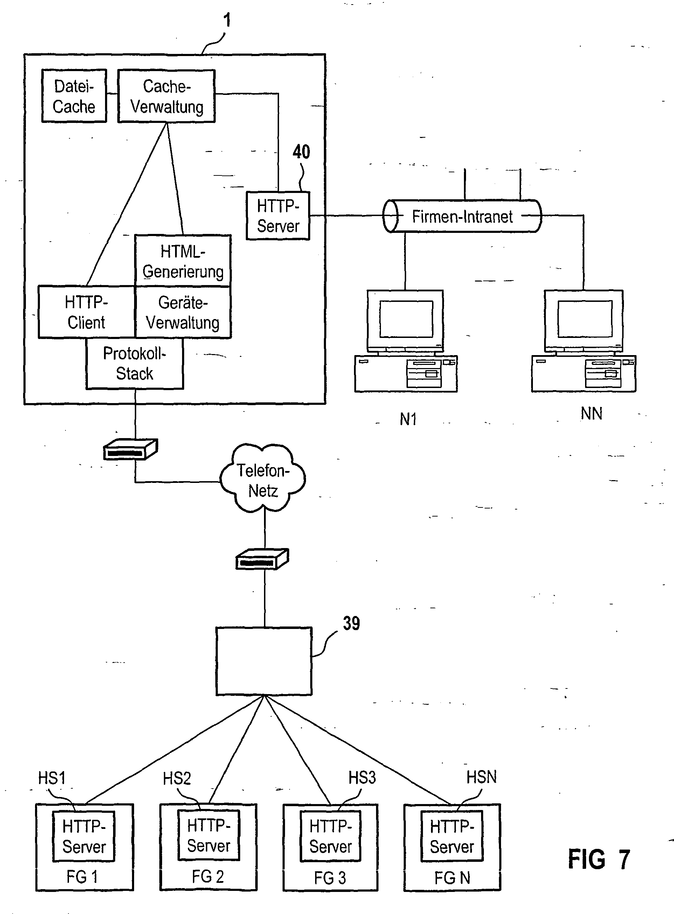

Die Nutzung des RPC-Protokolls mittels des Proxyservers 1 hat den Vorteil, dass sichergestellt ist, dass die Zugriffsmöglichkeit auf die Feldgeräte FG1...FGN auf das an den Proxyserver 1 angeschlossene Firmen-Intranet beschränkt bleibt. Ein Firmen-Intranet ist heute üblicherweise über ein HTTP-Gateway mit dem Internet verbunden. Dieses Gateway übernimmt hier eine Firewall-Funktion (vgl. Figur 7), indem es die Übertragung des RPC-Protokolls blockiert. Hierdurch kann außerhalb des Firmen-Intranets nicht mehr auf die Daten der Feldgeräte FG1...FGN zugegriffen werden, da alle dynamischen Daten der Feldgeräte FG1...FGN über das RPC-Protokoll übertragen werden.

Der Proxyserver 1 ermöglicht vielfältige Funktionen, die bei dem bisher üblichen, direkten Zugang zu den Feldgeräten FG1...FGN nicht zur Verfügung stehen. Die folgende Zusammenstellung listet weitere wesentliche Funktionen auf, die sich in Verbindung mit der nachfolgenden, detaillierten Beschreibung des Proxyservers 1 ergeben:
- Es wird eine eigene Homepage zur Verfügung gestellt, über die alle angeschlossenen Feldgeräte FG1...FGN erreichbar sind.
- Die angeschlossenen Feldgeräte FG1...FGN werden automatisch adressiert und erkannt; Darstellung dieser Feldgeräte FG1...FGN in der Homepage als Startseite auf-den Nutzereinrichtungen N1...NN für einen direkten Gerätezugriff.
- Es wird der Zugriff über Gerätenamen der Feldgeräte FG1...FGN ermöglicht, dies ist gegenüber dem Zugriff über die IP-Adresse nutzerfreundlicher.
- Der Proxyserver 1 kann mittels Browser auf den Nutzereinrichtungen N1...NN konfiguriert werden (e-mail-Adressen, Telefon-Nummern, Gerätenamen, ...)
- Der Proxyserver 1 definiert die möglichen Zugriffswege ("Firewall-Funktion").
- Der Proxyserver 1 kann Daten aus den Feldgeräte FG1...FGN zwischenspeichern. Diese Funktion eignet sich z. B. für die Protokollierung der Störfallinformationen oder der Betriebsmesswerte. Diese Daten werden intern in einer XML-Datenbank (XML - "Extended Markup Language") abgelegt.
- Der Proxyserver kann die aus den Feldgeräten FG1...FGN über das RPC-Protokoll übertragenen Daten im XML-Format zur
- Verfügung stellen. Hierdurch können beispielsweise nutzerspezifische Erweiterungen der im Proxyserver 1 verfügbaren Darstellungen vorgenommen werden. Hierzu steht ein im Proxyserver 1 integrierter XSL-Parser (XSL - "Extended Stylesheet Language") zur Verfügung.
- Durch die mit Hilfe des XSL-Parsers realisierbaren Filter auf die XML-Datenbank kann der Proxyserver 1 ebenfalls als Client für weitere Applikationen genutzt werden.
- Signalisierung von Ereignissen im LAN (LAN - "Local Area Network") via e-mail ist möglich. Der Proxyserver 1 stellt eigene e-mail-Postfächer zu Verfügung, die mittels eines POP3-Clients (POP3 - "Post Office Protocol Stepping 3"), wie z.B. Outlook, abgerufen werden können. Weiterhin ist eine Weiterleitung von e-mails an ein anderes Postfach mittels eines im Proxyserver 1 integrierten SMTP-Servers (STMP - "Simple Message Transfer Protocol") möglich.

Im folgenden wird die Ausbildung des Proxyservers 1 näher beschreiben.

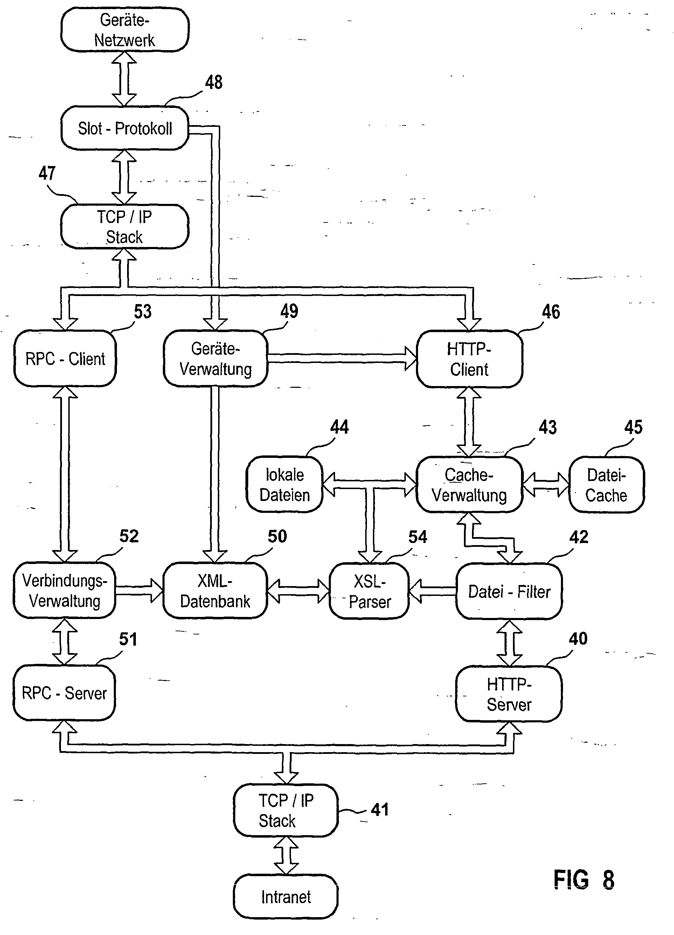

Figur 7 zeigt eine Anordnung mit dem Gerätenetzwerk und dem Firmen-Intranet gemäß Figur 1, wobei Elemente des Proxyservers 1 schematisch gezeigt sind. Figur 8 zeigt Funktionsblöcke des Proxyservers 1 in einem Blockschaltbild.

Gemäß Figur 7 weist jedes der Feldgeräte FG1...FGN einen jeweiligen HTTP-Server HS1...HSN auf, die dem jeweiligen HTTP-Server 34 (vgl. Figur 4) entsprechen und mit einem Sternkoppler 39 verbunden sind. Der Proxyserver 1 verfügt ebenfalls über einen HTTP-Server 40. Im folgenden wird die Arbeitsweise des Proxyservers 1 unter Bezugnahme auf Figur 8 beschrieben.

Der Zugriff auf den Proxyserver 1 geschieht immer aus dem lokalen Netz des Firmen-Intranets heraus, in dem sich die Nutzereinrichtungen N1...NN mit der jeweiligen Modemverbindung in das die Feldgeräte umfassende Gerätenetzwerk befinden, das ein Umspannwerk oder mehreren Unterwerken umfassen kann. Wird eine der Nutzereinrichtungen N1...NN über die zugehörige lokale IP-Adresse als Server angesprochen, wird dieser Zugriff über einen TCP/IP-Stack 41 (TCP - "Transfer Control Protocol") an den HTTP-Server 40 weitergeleitet.

Der HTTP-Server 40 liefert die angeforderten Dateien in das Firmen-Intranet. Zu diesem Zweck wendet sich der HTTP-Server 40 über einen Dateifilter 42 an eine Cacheverwaltung 43. Der Dateifilter 42 leitet die Anforderung normalerweise an die Cacheverwaltung 43 weiter. Nur bestimmte Anforderungen werden anhand des angeforderten Dateityps erkannt und einem anderen Verarbeitungsweg zugeführt. Diese Ausnahmen werden später beschrieben. Die Cacheverwaltung 43 versucht als erstes, die angeforderte Datei in den lokalen Dateien 44 oder in einem Dateicache 45 zu finden. Ist die angeforderte Datei weder eine lokale Datei des Proxyservers 1 noch im Dateicache 45 vorhanden, wird die Dateianforderung an einen HTTP-Client 46 weitergeleitet. Dieser baut über einen weiteren TCP/IP-Stack 47 eine Verbindung zum HTTP-Server HS1, ... bzw. HSN des angesprochenen Feldgeräts FG1, ... bzw. FGN im Gerätenetzwerk auf, um die angeforderte Datei von dort zu beziehen.

Als Verbindung zum Gerätenetzwerk wird vorzugsweise eine Modemverbindung mit dem PPP-Protokoll genutzt (vgl. Figur 1). Da der Proxyserver 1 über diese Modemverbindung jedoch gleichzeitig mehrere Verbindungen zu verschiedenen Feldgeräten FG1...FGN halten kann, ist eine Arbitierung dieser Modemverbindung erforderlich, da das PPP-Protokoll nur eine Punkt- zu Punkt-Verbindung verwalten kann. Hierzu dient ein Block Slot-Protokoll 48. Dieses Protokoll teilt den einzelnen PPP-Verbindungen Zeitscheiben auf der Modem-Kommunikationsstrecke zu und verhindert so Kollisionen zwischen den einzelnen Verbindungen. Der Block Slot-Protokoll 48 ist weiterhin dafür zuständig, alle im Gerätenetzwerk aktiven Feldgeräte FG1...FGN zu erkennen. Dazu wird das Gerätenetzwerk zyklisch nach aktiven Feldgeräten abgesucht. Die erkannten aktiven Feldgeräte werden von einer Geräteverwaltung 49 in eine XML-Datenbank 50 des Proxyservers 1 eingetragen.

Bei der XML-Datenbank 50 handelt es sich um einen nach dem standardisierten "Document Object Model" abgelegten Datenbaum. Enthält nun eine über den HTTP-Server 40 in den Browser einer mit dem Proxyserver 1 verbunden Nutzungseinrichtung N1, ... bzw. NN geladene HTML-Seite Java-Code, der eine parallele UDP-Verbindung (UDP - "User Defined Protocol") für das RPC-Protokoll aufbaut, dann wird über diesen Weg ein RPC-Server 51 aus dem Firmen-Intranet heraus angesprochen. Da das RPC-Protokoll aus Leistungsgründen auf das standardisierte UDP/IP-Protokoll aufsetzt, muss hier im Proxyserver 1 eine Verbindungsverwaltung 52 enthalten sein, da das UDP-Protokoll nicht verbindungsorientiert arbeitet. Die Verbindungsverwal-tung 52 stellt sicher, dass für jede Nutzungseinrichtung N1...NN aus dem Firmen-Intranet ein eigener Kommunikationsport für einen RPC-Client 53 des Proxyservers 1 in das Gerätenetzwerk reserviert wird. Die RPC-Anforderungen aus dem Firmen-Intranet werden dann über den RPC-Client 53 des Proxyservers 1 direkt in das Gerätenetzwerk weitergeleitet.

Die Antworten der Feldgeräte FG1...FGN auf RPC-Anforderungen werden an den RPC-Server 51 weitergeleitet. Dieser gibt die Antwort des jeweiligen Feldgeräts FG1, ... bzw. FGN an die Nutzereinrichtungen über das Firmen-Intranet weiter. Parallel hierzu werden die aktuell im RPC-Protokoll übertragenen dynamischen Daten aus dem jeweiligen Feldgerät FG1, ... bzw. FGN in der XML-Datenbank 50 im Proxyserver 1 abgelegt.

Die in der XML-Datenbank 50 gespeicherten Daten können mit Hilfe eines im Proxyserver 1 integrierten XSL-Parsers 54 in beliebige andere Datenformate konvertiert werden. Die dazu notwendigen Transformationsanweisungen müssen als XSL-Scriptdatei lokal im Proxyserver 1 abgelegt werden. Um einen solchen Transformationsprozess auszulösen, muss am HTTP-Server 40 eine *.XML-Datei angefordert werden. Eine solche Anforderung wird von dem am HTTP-Server 40 angeschlossenen Dateifilter 42 aus dem normalen Zugriffsweg auf die Cacheverwaltung 43 herausgefiltert und an den XSL-Parser 54 weitergeleitet. Dieser liest aus den im Proxyserver 1 lokal abgelegten Dateien neben der angeforderten XML-Datei eine gleichnamige XSL-Datei und startet den Transformationsprozess. Das Ergebnis dieser Transformation wird vom HTTP-Server 40 an den anfordernden Nutzer gesendet. Auf diese Weise können z. B. HTML-Dateien dynamisch aus einer XSL-Vorlage mit den aktuellen Daten der Feldgeräte FG1...FGN aus der XML-Datenbank 50 erzeugt oder einfach ein Teilbaum der Datenbank als XML-Datei übertragen werden.

Der Dateifilter 42, die Cache-Verwaltung 43, die lokalen Dateien 44, der Dateicache 45, der XSL-Parser 54 sowie die XML-Datenbank 50 bilden ein Dateisystem des Proxyservers 1.

Im folgenden werden einzelne Funktionsblöcke des Proxyservers 1 näher beschrieben.

### HTTP-Server

zunächst wird die grundsätzliche Arbeitsweise des im Proxyserver 1 ausgebildeten HTTP-Servers 40 (vgl. Figur 8) erläutert, wobei zum besseren Verständnis einige wesentliche Grundlagen des HTTP's beschrieben werden.

Wie bei anderen Applikationsprotokollen im Internet handelt es sich bei HTTP (HTTP - "Hypertext Transfer Protocol") um ein ASCII-Protokoll, das für den Datenaustausch eine abgesicherte TCP-Verbindung zwischen einem Client (Computer des Internetnutzers) und einem Server (Servereinrichtung, auf welcher abrufbare Internetinhalte - Daten - zur Verfügung stehen) benötigt. Als Anknüpfungspunkt ist dabei der Port 80 definiert, d. h., ein HTTP-Server lauscht an diesem Port auf neue Client-Verbindungen. Alternativ kann die überwiegende Anzahl von HTTP-Server-Software über einen entsprechenden Konfigurationsdialog auch angewiesen werden, einen anderen Port für die Kontaktaufnahme heranzuziehen.

Anders als bei anderen Protokollen, z. B. FTP (FTP - "File Transfer Protocol") und POP3, ist eine Verbindung zwischen einem HTTP-Client und einem HTTP-Server sehr kurzlebig. Der HTTP-Client baut eine TCP-Verbindung zum gewünschten HTTP-Server über den Port 80 auf und setzt eine Anfrage nach einem gewünschten Dokument an den HTTP-Server ab. Der HTTP-Server erhält die Anfrage, wertet sie aus und sendet - im Erfolgsfall - das gewünschte Dokument an den HTTP-Client zurück. Der HTTP-Server schließt die TCP-Verbindung automatisch, nachdem er dem HTTP-Client das geforderte Dokument oder eine Fehlermeldung als Antwort auf dessen Anfrage zugesandt hat.

Eine wichtige Funktionalität von HTTP ist es, dass der HTTP-Client dem HTTP-Server mitteilen kann, welche Art von Daten dieser verstehen kann. Es muss also bei jeder Anfrage eine Kommunikation zwischen dem HTTP-Client und dem HTTP-Server darüber stattfinden, wie die Daten übertragen werden sollen. Diese Kommunikation erzeugt einen sogenannten Überschuss bzw. Überhang ("overhead"); HTTP wird deshalb auch als statusloses Protokoll ("stateless protocol") bezeichnet, weil die Verbindung nicht mehrere Phasen durchläuft, vom Einloggen, über den Datenaustausch bis hin zum Ausloggen durch den HTTP-Client. Dieses erleichtert einerseits die Entwicklung von HTTP-Client-/HTTP-Server-Software, ist aber im Hinblick auf die Nutzung der zur Verfügung stehenden Bandbreite nicht sehr effizient.

Das HTTP-Protokoll wird verwendet, um Zugriff auf Quellen im URL-Format (URL - "Uniform Resource Locator") zu erlangen. Der HTTP-Client, meistens ein Web-Browser auf dem Computer des Internet-Benutzers. Er verlangt eine HTML-Seite und generiert danach eine Sequenz von Anfragen bezüglich der Dateiverweise in dieser HTML-Seite. Danach wird der Benutzter wahrscheinlich einen Link in der angefragten HTML-Seite anklicken, und der HTTP-Client schickt eine Anfrage, bezüglich der mit diesem Link verknüpften HTML-Seiten, an den gleichen oder einen weiteren HTTP-Server. Diese weiteren Kommunikationsverbindungen haben keine Informationen mehr über eine vorhergegangene Verbindung. Dieses funktioniert bei einfachen Client/Server-Umgebungen. Bei umfangreicheren Kommunikationen kann diese Arbeitsweise allerdings zum Problem werden, denn für jede noch so kleine Datenmenge, die übertragen werden soll, fällt dieser Überschuss ("Overhead") an, was die Effizienz mindert.

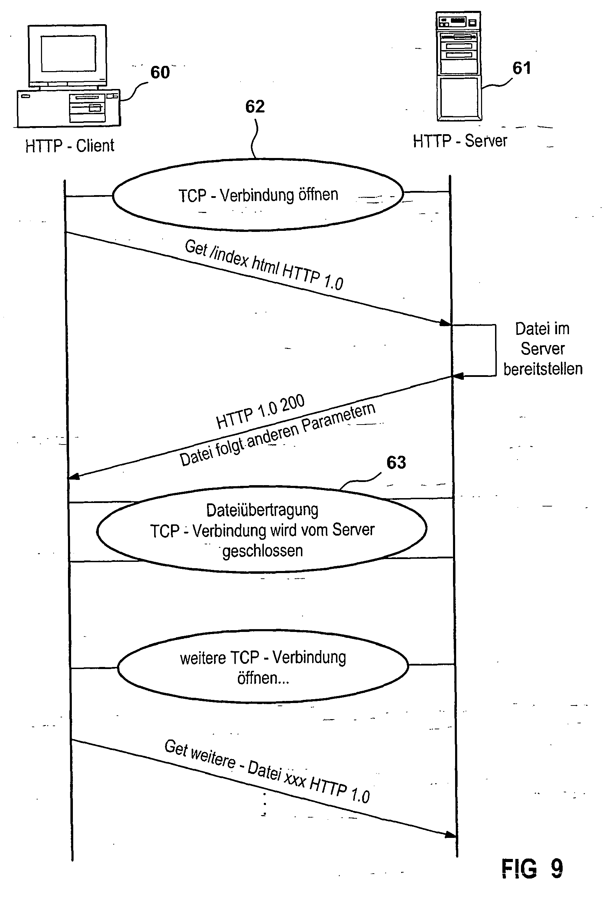

Figur 9 zeigt eine schematische Darstellung der Syntax einer Anfrage in Verbindung mit einer HTTP-Client/Server-Interaktion.

Die HTTP-Client/Server-Interaktion besteht aus einer einzigen Anfrage/Antwort-Kommunikation. Sie umfasst eine "request line", ein oder mehrere optionale "request header fields" und einen optionalen "entity body". Von der HTTP-Client-Seite 60, also in der Regel vom Internet-Browser aus, wird eine TCP-Verbindung zum HTTP-Server 61 geöffnet 62. Anschließend sendet der HTTP-Client 60 einen Kommandostring an den HTTP-Server 61. Der HTTP-Server 61 antwortet über die vom HTTP-Client 60 geöffnete TCP-Verbindung mit einem Kopf, der neben der vom HTTP-Server 61 unterstützten HTTP-Version auch den MIME-Type und die Kodierung der angeforderten Datei enthält. An diesen Kopf im ASCII-Format wird vom HTTP-Server 61 der Inhalt der angeforderten Datei angefügt. Nachdem der HTTP-Server 61 die komplette Datei gesendet hat, schließt dieser die vom HTTP-Client 60 geöffnete TCP-Verbindung wieder 63. Dieser Vorgang kann sich beliebig oft wiederholen.

Die folgende Zusammenstellung zeigt den Ablauf eines typischen HTTP-Zugriffs:
1."connection" (Verbindungsaufbau)
   • WWW-Client baut eine TCP/IP-Verbindung zum WWW-Server auf
2. "request" (Anforderung)
   • Angabe einer Zugriffsmethode (GET, HEADER, POST...)
   • Spezifikation des gewünschten Dokumentes mittels URL
   • Zusatzinformationen in Form von MIME-Header
   • Daten (bei POST)
3. "response" (Antwort)
   • Header mit Statuscode
   • Zusatzinformationen in Form von MIME-Header
   • Dokument in HTML-Format
   • Daten in sonstigen Formaten (Bilder, Sound...)
4. "close" (Verbindungsabbau)
   • Im Normalfall vom HTTP-Server aus, nach Datenübertragung
   • Im Spezialfall vom HTTP-Client aus (Übertragungszeit, Speicherplatz)

Hierbei besteht die "request line" aus drei Textfeldern, welche durch Leerzeichen getrennt sind. Das erste Feld spezifiziert die Methode (oder das Kommando). Das zweite Feld spezifiziert den Namen der Quelle (ist die URL ohne die Angabe des Protokolls und des Hosts). Das letzte Feld spezifiziert die verwendete Protokollversion des HTTP-Clients 60, beispielsweise HTTP/1.0. Die "request header fields" übergeben zusätzliche Informationen über die Anfrage und den HTTP-Client 60. Die Felder werden als eine Art RPC-Parameter benutzt. Jedes Feld besteht aus einem Namen, gefolgt von eine Doppelpunkt und dem Feldwert. Die Reihenfolge der "header fields" ist hierbei nicht wichtig. Der "entity body" wird manchmal von HTTP-Clients 60 verwendet, um größere Informationspakete an den HTTP-Server 61 zu senden.

### Dateicache

Um eine möglichst effiziente Arbeit der Cacheverwaltung 43 zu ermöglichen, arbeitet der Dateicache 45 nicht wie üblich mit der URL, dem Datum und der Lebensdauer der zu verwaltenden Dateien, sondern nutzt weitere Kriterien zur Identifizierung einer Datei. Würden nur die drei genannten Kriterien für den Entscheid verwendet werden, ob eine lokal im Dateicache vorhandene Datei mit der im Feldgerät verfügbaren Datei identisch ist, dann wäre für die Durchführung dieses Tests ein Vergleich der genannten Dateimerkmale erforderlich. Dazu müsste für jede Datei der Kopf aus dem Feldgerät angefordert werden. Da das Dateisystem der Feldgeräte FG1...FGN jedoch nur als Einheit in Form eines KON-Dateien (konvertierte Dateien - Format der in die Nutzereinrichtungen N1...NN ladbaren Dateien) geladen werden kann, ist ein solcher Vergleich nicht für jede Datei erforderlich. Eine Ausnahme bilden hier die dynamisch in den Feldgeräten FG1...FGN erzeugten Dateien, beispielsweise die Datei MLFB.TXT (MLFB - Maschinenlesbare Fabrikantenbezeichnung), die nicht aus dem Dateisystem der Feldgeräte FG1...FGN ausgelesen, sondern aus der im jeweiligen Feldgerät FG1, ... bzw. FGN eingestellten MLFB generiert wird.

Als Unterscheidungsmerkmal zwischen diesen beiden Dateiformen, nämlich den statischen Dateien und den Dateien mit dynamischen Daten, dient ein Eintrag in einer Datei "nocache.txt". Alle dynamisch in den Feldgeräten FG1...FGN erzeugten Dateien müssen in dieser Datei aufgeführt sein. Statische Dateien werden vom HTTP-Server HS1...HSN der Feldgeräte FG1...FGN mit einer unendlichen Lebensdauer gekennzeichnet. Im folgenden ist ein Beispiel für den Inhalt der Datei "nocache.txt" gezeigt:
/mlfb.txt: MLFB, BF-Nr., Displaytyp
   /textpool.zip: gerätespezifische Texte für Applets
   (mehrsprachig)
   /ver.txt: Version, Datum
   /chartab.jar: Gerätezeichensatz

Die Datei "ver.txt" kann hierbei den folgenden Inhalt aufweisen/anzeigen:
V01.01.01
   Tue, 24 Oct 2000 07:50:00 GMT

### Slot-Protokoll des Proxyservers

Das Slot-Protokoll 48 (vgl. Figur 8) dient der Anbindung des Proxyservers 1 an die Feldgeräte FG1...FGN in einer Anordnung mit Sternkoppler nach Figur 7. Das Slot-Protokoll 48 gliedert sich in die beiden Bereiche (i) Geräteerkennung und (ii) Arbitierung der Sternkoppleranordnung. Die Geräteerkennung dient der automatischen Erkennung aller an den Sternkoppler 39 angeschlossenen Feldgeräte FG1...FGN. Die Arbitierung muss Kollisionen von Datagrammen unterschiedlicher Feldgeräte FG1...FGN auf der Kommunikationsverbindung zwischen dem Proxyserver 1 und den einzelnen Feldgeräten FG1...FGN verhindern.

Im folgenden wird die Geräteerkennung bei Nutzung der Sternkoppleranordnung 39 beschrieben.

### Geräteerkennung

Die Geräteerkennung stellt einen Bestandteil des Slot-Protokolls 48 dar. Dieser Protokollteil belegt die serielle Verbindung exklusiv, d. h. während der Geräteerkennung darf keine andere Kommunikation auf der Modemstrecke aktiv sein. Deshalb wird die Geräteerkennung nur beim Aufbau der Modemverbindung aktiviert. Im laufenden Betrieb des Beobachtungs- und Bediensystems ist dieser Protokollteil inaktiv. Die Geräteerkennung kann jedoch bei Bedarf aktiviert werden.

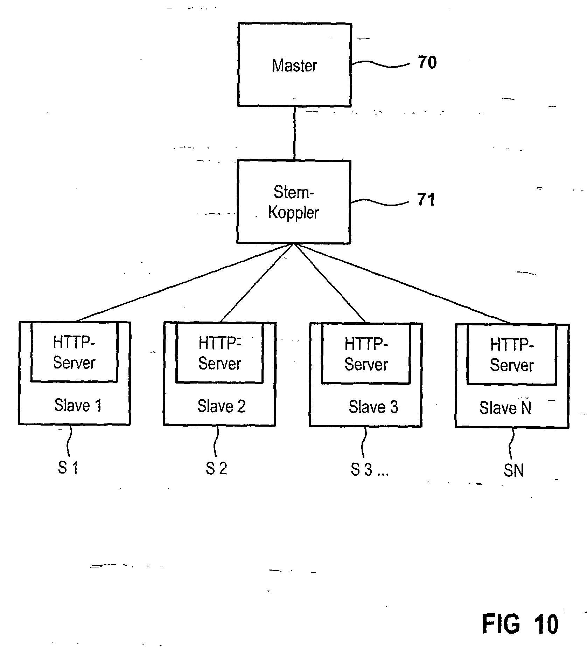

Figur 10 zeigt eine Master-Slave-Anordnung mit Sternkoppler zur Erläuterung der Geräteerkennung.

Das Slot-Protokoll 48 arbeitet nach dem Master-Slave-Prinzip. Ein Master 70 befindet sich am oberen Anschluss in Figur 10. Die unteren Anschlüsse eines Sternkopplers 71, welcher dem Sternkoppler 3 in Figur 1 entspricht, werden von jeweils einem Slave S1...SN belegt, welche den Feldgeräten FG1...FGN gemäß Figur 1 entsprechen. Der Master 70 könnte jede mögliche Adresse der angeschlossenen Slaves S1...SN abfragen und bei einer Antwort auf diese Anfrage den gefundenen Slave S1, ... bzw. SN in die Liste der Geräte aufnehmen, die dem Master 70 bekannt sind. Diese Vorgehensweise ist jedoch bei einem Adressbereich von 32 Bit nicht mehr durchführbar. Hier wären 2^32 Abfragen erforderlich. Diese Zahl ist jedoch nicht mehr durchführbar, da hier die für diese Abfrage erforderliche Zeit die Lebensdauer der Anlage überschreiten würde. Um dennoch die an den Master 70 angeschlossenen Geräte automatisch erkennen zu können, wird das Problem erfindungsgemäß in der folgenden Weise gelöst:

Bei einem Adressierungsschema mit einer Binär kodierten Adresse mit einer fest vorgegebenen Adresslänge wird bei einer Anfrage immer ein Adressbereich abgefragt. Auf diese Anfrage antworten nur die Slaves, die sich in dem abgefragten Adressbereich befinden. Da sich hier mehrere Feldgeräte (Slaves) im gleichen abgefragten Adressbereich befinden können, kommt es bei einer gleichzeitigen Antwort von mehreren der Slaves S1...SN in diesem Fall zwangsläufig zu einer Kollision. Diese Kollision wird bewusst in Kauf genommen und ist Bestandteil des vorgeschlagenen Verfahrens. Aus diesem Grund prüft der Master 70 nur, ob innerhalb eines definierten Zeitraums überhaupt eine Antwort auf seine Anfrage eingegangen ist.

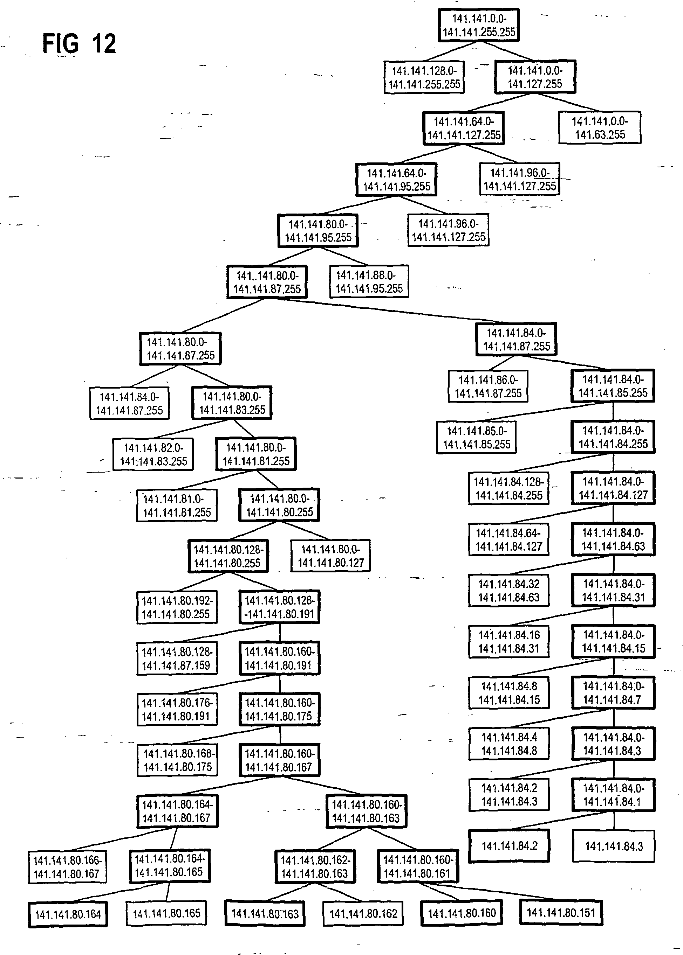

Beträgt der Adressraum der adressierbaren Slaves S1...SN n Bits, sendet der Master 70 jeweils eine Anfrage mit einem feststehenden Bit der Adresse und einer Maske für die anderen Adressbits aus. Mit zwei Abfragen kann getestet werden, ob sich in dem durch das feststehende-Bit vorgegebenen Adressbereich Slaves befinden. Wurde auf eine Anfrage für einen Adressbereich eine Antwort erhalten, dann wird die Maske um ein Bit verkleinert und für das nächste feststehende Bit mit wiederum zwei Abfragen getestet, ob sich in dem nun kleineren Adressbereich Slaves befinden. Kommt auf die Anfrage für den nun kleineren Adressbereich eine Antwort, dann ist das nächste Bit des Adressbereichs gefunden, in dem sich Slaves befinden. Dieser Vorgang wird so lange wiederholt, bis die Maske für den Adressbereich sich auf 0 Bits reduziert hat. Dann ist einer der Slaves S1...SN am Bus eindeutig identifiziert. Kommen bei einer Abfrage auf beide Zustände des gerade getesteten Bits Antworten, dann werden beide Zweige in der nächsten Iteration weiter verfolgt. Da bei einer Maskengröße von 0 Bits nur das Gerät bzw. der Slave mit der angefragten, nun vollständig feststehenden Adresse auf die gestellte Anfrage antworten kann, können bei der letzten Anfrage auch keine Kollisionen mehr auftreten, und das Antworttelegramm der zu detektierenden Slaves kann spontane Informationen über den Zustand der angeschlossenen Slaves enthalten. Figur 12 erläutert das beschriebene Verfahren noch einmal anhand eines einfachen Adressierungsschemas mit einer 4-Bit Adresse, also für einen Adressraum vom 0 bis 15. Es wird vorausgesetzt, dass sich die Geräte mit den Adressen 3, 4 und 7 in der Anordnung befinden. Es wird mit der Abfrage vom höchstwertigen Bit begonnen. Es wird also zum einen der Adressraum 0 bis 7 und in einer zweiten Abfrage der Adressraum 8 bis 15 mit einer Abfrage getestet. Auf diese zweite Abfrage antwortet kein Gerät. Auf die erste Abfrage erhält der Master eine oder mehrere Antworten. Deshalb wird im Adressraum 0 bis 7 die Maske um ein weiteres Bit verkleinert. Es werden also nun die Adressbereiche 0 bis 3 mit einer dritten Abfrage und 4 bis 7 mit einer vierten Abfrage geprüft. Dieser Vorgang wiederholt sich entsprechend der Darstellung in Fig. 12 so lange, bis die Adressen vollständig aufgelöst und damit alle Geräte gefunden sind.

In dem beschriebenen Beispiel werden die Slaves S1...Sn bzw. die Feldgeräte FG1...FGN mittels eines IP-basierten Protokolls an den Master 70 angeschlossen. Beim IP-Protokoll haben alle Busteilnehmer eine 32 Bit-Adresse. Die Adresse wird in Oktette aufgeteilt und jedes Oktett dezimal dargestellt. Die hexadezimale 32 Bit-Zahl Ox8D8D8000 entspricht also der IP-Adresse 141.141.128.0. Für den eigentlichen Vorgang zur Geräteerkennung/-abfrage wird eine rekursive Variante des im vorhergehenden Absatz beschriebenen Verfahrens verwendet.

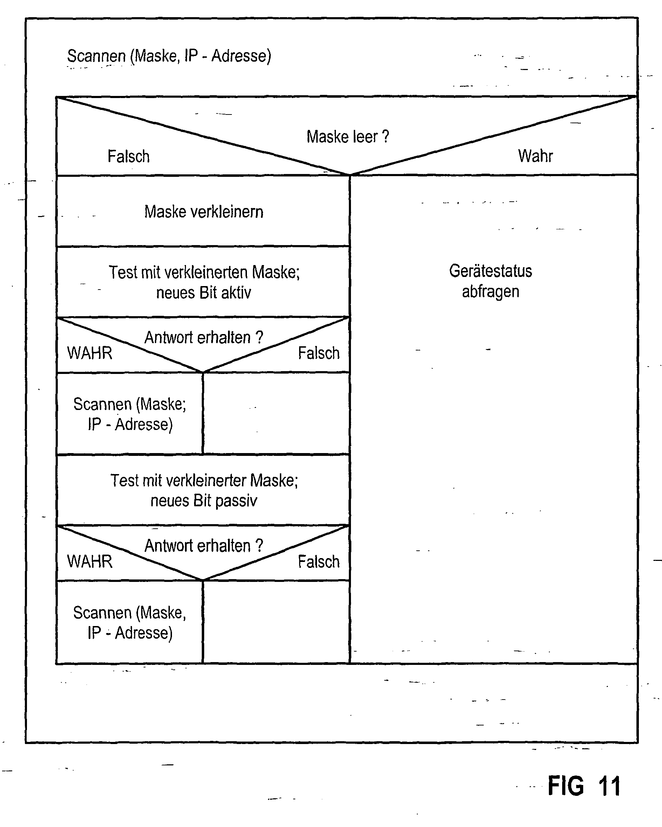

Figur 11 zeigt das Ablaufdiagramm des Verfahrens als Nassi-Sneidermann-Diagram.

Im Rahmen des beschriebenen Verfahrens wird der Test, ob ein Feldgerät (Slave) im verfügbaren Adressbereich ansprechbar ist, vorzugsweise mit Hilfe eines als solchen bekannten Request-Datagramms vom Master 70 ausgelöst. Im Unterschied zu herkömmlichen Verfahren wird jedoch bewusst in Kauf genommen, dass auf ein vom Master 70 ausgesandtes Request-Datagramm mehrere der Slaves S1...SN gleichzeitig antworten. Dadurch, dass im Sternkoppler 71 alle von den Slaves S1...SN empfangenen Signale über ein logisches ODER-Gatter verknüpft werden und dieses Summensignal an den Master 70 weitergeleitet wird, kann sichergestellt werden, dass im Master 70 eine Antwort eines der Slaves S1...SN in jedem Fall erkannt wird. Wenn sich die Antwort-Datagramme mehrerer der Slaves S1...SN zeitlich überlappen, wird im Master 70 ein fehlerhaftes Datagramm empfangen. Auch dieser Fall wird als Antwort erkannt.

Mit Hilfe der Vorgabe einer maximalen Antwortzeit für die Slaves S1...SN auf ein Request-Datagramm des Masters 70 und der Datagramm-Übertragungszeit kann eine Überwachungszeit für den Master 70 definiert werden. Erhält der Master 70 innerhalb dieser Überwachungszeit eine Antwort, dann befinden sich im angefragten Adressbereich Slaves bzw. Feldgeräte. Im Umkehrschluss befinden sich im angefragten Adressbereich keine Feldgeräte, wenn vom Master 70 innerhalb der Überwachungszeit keine Antwort auf den Request empfangen wurde.

Da bei einer vollständigen Auflösung der Adresse im Request des Maters 70 (d.h. die Maske wird leer) nur noch einer der Slaves S1...SN antworten darf, kann in diesem Fall auch keine Kollision mehr auftreten. Damit kann in diesem Fall die Fehlersicherung des empfangenen Datagramms benutzt werden, um eine Leitungsstörung und damit eine mögliche Fehlerkennung eines angeschlossenen Slaves auszuschließen. Tritt während der Überwachungszeit nach einem Request des Masters eine Leitungsstörung auf, die einen nicht vorhandenen Slave vortäuscht, führt das nur zu einer Verlängerung des Vorgangs zum Abfragen, aber nicht zu einer falschen Erkennung von angeschlossenen Slaves, da diese Leitungsstörung spätestens bei der vollständigen Auflösung der Maske erkannt wird. Der folgende Absatz zeigt anhand eines Beispiels die Funktion des Verfahrens:

| | | | |
|---|---|---|---|
| Test: | 141.141.128.0 | Mask: | 255.255.128.0 |
| Test: | 141.141.0.0 | Mask: | 255.255.128.0 |
| Test: | 141.141.64.0 | Mask: | 255.255.192.0 |
| Test: | 141.141.96.0 | Mask: | 255.255.224.0 |
| Test: | 141.141.64.0 | Mask: | 255.255.224.0 |
| Test: | 141.141.80.0 | Mask: | 255.255.240.0 |
| Test: | 141.141.88.0 | Mask: | 255.255.248.0 |
| Test: | 141.141.80.0 | Mask: | 255.255.248.0 |
| Test: | 141.141.84.0 | Mask: | 255.255.252.0 |
| Test: | 141.141.86.0 | Mask: | 255.255.254.0 |
| Test: | 141.141.84.0 | Mask: | 255.255.254.0 |
| Test: | 141.141.85.0 | Mask: | 255.255.255.0 |
| Test: | 141.141.84.0 | Mask: | 255.255.255.0 |
| Test: | 141.141.84.128 | Mask: | 255.255.255.128 |
| Test: | 141.141.84.0 | Mask: | 255.255.255.128 |
| Test: | 141.141.84.64 | Mask: | 255.255.255.192 |
| Test: | 141.141.84.0 | Mask: | 255.255.255.192 |
| Test: | 141.141.84.32 | Mask: | 255.255.255.224 |
| Test: | 141.141.84.0 | Mask: | 255.255.255.224 |
| Test: | 141.141.84.16 | Mask: | 255.255.255.240 |
| Test: | 141.141.84.0 | Mask: | 255.255.255.240 |
| Test: | 141.141.84.8 | Mask: | 255.255.255.248 |
| Test: | 141.141.84.0 | Mask: | 255.255.255.248 |
| Test: | 141.141.84.4 | Mask: | 255.255.255.252 |
| Test: | 141.141.84.0 | Mask: | 255.255.255.252 |
| Test: | 141.141.84.2 | Mask: | 255.255.255.254 |
| Test: | 141.141.84.3 | Mask: | 255.255.255.255 |
| Test: | 141.141.84.2 | Mask: | 255.255.255.255 |
| Found: | 141.141-.84.2 | | |
| Test: | 141.141.84.0 | Mask: | 255.255.255.254 |
| Test: | 141.141.80.0 | Mask: | 255.255.252.0 |
| Test: | 141.141.82.0 | Mask: | 255.255.254.0 |
| Test: | 141.141.80.0 | Mask: | 255.255.254.0 |
| Test: | 141.141.81.0 | Mask: | 255.255.255.0 |
| Test: | 141.141.80.0 | Mask: | 255.255.255.0 |
| Test: | 141.141.80.128 | Mask: | 255.255.255.128 |
| Test: | 141.141.80.192 | Mask: | 255.255.255.192 |
| Test: | 141.141.80.128 | Mask: | 255.255.255.192 |
| Test: | 141.141.80.160 | Mask: | 255.255.255.224 |
| Test: | 141.141.80.176 | Mask: | 255.255.255.240 |
| Test: | 141.141.80.160 | Mask: | 255.255.255.240 |
| Test: | 141.141.80.168 | Mask: | 255.255.255.248 |
| Test: | 141.141.80.160 | Mask: | 255.255.255.248 |
| Test: | 141.141.80.164 | Mask: | 255.255.255.252 |
| Test: | 141.141.80.166 | Mask: | 255.255.255.254 |
| Test: | 141.141.80.164 | Mask: | 255.255.255.254 |
| Test: | 141.141.80.165 | Mask: | 255.255.255.255 |
| Test: | 141.141.80.164 | Mask: | 255.255.255.255 |
| Found: | 141.141.80.164 | | |
| Test: | 141.141.80.160 | Mask: | 255.255.255.252 |
| Test: | 141.141.80.162 | Mask: | 255.255.255.254 |
| Test: | 141.141.80.163 | Mask: | 255.255.255.255 |
| Found: | 141.141.80.163 | | |
| Test: | 141.141.80.162 | Mask: | 255.255.255.255 |
| Test: | 141.141.80.160 | Mask: | 255.255.255.254 |
| Test: | 141.141.80.161 | Mask: | 255.255.255.255 |
| Found: | 141.141.80.161 | | |
| Test: | 141.141.80.160 | Mask: | 255.255.255.255 |
| Found: | 141.141.80.160 | | |
| Test: | 141.141.80.128 | Mask: | 255.255.255.224 |
| Test: | 141.141.80.0 | Mask: | 255.255.255.128 |
| Test: | 141.141.64.0 | Mask: | 255.255.240.0 |
| Test: | 141.141.0.0 | Mask: | 255.255.192.0 |
| 58 Abfragen ... | | | |

Die Abfragen schlossen den Adressraum 141.141.0.0 bis 141.141.255.255 ein. Es wurden die Geräte mit den folgenden Adressen gefunden:
141.141.84.2
141.141.80.164
141.141.80.163
141.141.80.161
141.141.80.160

Figur 12 illustriert den dargestellten Vorgang in Form einer Baumdarstellung, wobei die fett umrahmten Felder die Abfragen kennzeichnen, die von einem oder mehreren Slaves S1...SN bzw. Feldgeräten beantwortet wurden.

### Broadcast-Dienst

Für die Anbindung des Proxyservers 1 an die Feldgeräte FG1...FGN kann anstelle der einfachen Architektur mit Sternkoppler 39 ein IP-basiertes Netzwerk genutzt werden. In diesem Fall ist eine Arbitierung dieses Netzwerks durch ein Protokoll, beispielsweise das Slot-Protokoll 48, nicht erforderlich. Diese Funktion übernimmt das Netzwerk selbst. Für die Geräteerkennung können bei dieser Ausführungsform ebenfalls Funktionen des Netzwerks genutzt werden. Bei einer Netzwerkverbindung zwischen dem Proxyserver 1 und den Feldgeräten FG1...FGN wird zur Selbstkonfigurierung des Beobachtungs- und Bediensystems ein Broadcast-Dienst benutzt.

In beiden Fällen des Erkennens der angeschlossenen Feldgeräte FG1...FGN, d.h. bei der Ausführungsform mit Sternkoppleranordnung und bei Nutzung eines Netzwerks, insbesondere eines LANs, wird das Erkennen bei Inbetriebsetzung des Beobachtungs- und Bediensystems automatisch ausgeführt und erfolgt ohne vorherige Parametrierung der am System beteiligten Komponenten.

Der Broadcast-Dienst dient zum Erkennen der an das IP-basierte Netzwerk (z. B. LAN) angeschlossenen Feldgeräte, die einen Server für ihre eigene Bedienung enthalten. Weiterhin dient der Broadcast-Dienst zum Einsammeln von in den angeschlossenen Feldgeräten aufgetretenen spontanen Ereignissen. Der Broadcast-Dienst ist eine IP-Applikation und basiert somit auf den Funktionen des IP-Stacks und setzt auf dem UDP-Protokoll auf. Für diesen Dienst wird Serverseitig z. B. ein fest vorgegebener Port 0xD000 reserviert. Clientseitig wird dynamisch ein freier Port ausgewählt. Durch den Einsatz des Standard-UDP/IP-Protokolls kann hier auf den IP-Programmierschnittstellen von üblichen Betriebssystemen, wie z. B. MS-Windows oder Linux, aufgesetzt werden. Damit kann der Proxyserver 1 problemlos auf klassische Büroserver portiert werden.

Der Broadcast-Dienst ist sowohl im Proxyserver 1 als auch in den einzelnen Feldgeräten aktiv. Für den Broadcast-Dienst wird der Proxyserver 1 als Master festgelegt. Eine Konfigurationsabfrage ist ein vom Master abgesendetes UDP-Telegramm. Dieses Telegramm richtet sich je nach Konfiguration an eine Broadcast- oder eine Multicast-IP-Adresse. Eine Beschreibung von Broadcast- oder Multicast-IP-Adressen findet sich beispielsweise in Karanjit S. Siyan: Inside TCP/IP Third Edition, New Riders Publishing, Indianapolis, 1997, ISBN 1-56205-714-6, Seite 187ff.

Alle Feldgeräte werden anschließend auf die Konfigurationsabfrage des Masters mit einem UDP-Telegramm antworten, welches - die wichtigsten Konfigurationsdaten des Feldgeräts enthält. Da jetzt alle an dem IP-basierten Netzwerk angeschlossenen Feldgeräte theoretisch gleichzeitig Antworten möchten, wird es zunächst zu einigen Kollisionen auf dem genutzten Bus kommen, die durch das CSMA/CD-Verfahren (CSAM - "carrier sense, multiple access/collision detect") aufgelöst werden. Eine Beschreibung dieses Verfahrens ist ebenfalls in Karanjit S. Siyan: Inside TCP/IP Third Edition, New Riders Publishing, Indianapolis, 1997, ISBN 1-56205-714-6, Seite 97ff, zu finden. Die UDP-Antworttelegramme aller aktiven Feldgeräte werden also beim abfragenden Master innerhalb einer gewissen Zeit ankommen. Somit ist der Abfragende in der Lage festzustellen, wie viele und welche Feldgeräte sich im Netzwerk befinden, und kann anschließend von den Feldgeräten weitere Informationen über das HTTP-Protokoll oder andere IP-basierte Protokolle anfordern.

Der Broadcast-Dienst hat außerdem noch die Aufgabe, ein spontan in einem der Feldgeräte auflaufendes Ereignis im IP-basierten Netzwerk an die Teilnehmer des Broadcast-Dienstes zu verteilen. Da die Feldgeräte einerseits keine Information darüber besitzen, welcher Master für dieses Signal zuständig ist und es andererseits möglich sein kann, das im IP-basierten Netzwerk mehrere Master mit verteilten Aufgaben existieren, wird das Ereignistelegramm als Broadcast an alle Netzwerkteilnehmer gesendet. Die Master können dieses Signal je nach Ereignistyp und Sender ignorieren oder eine Aktion auslösen, welche über ein weiteres Protokoll, z. B. HTTP, zusätzliche Informationen von dem Feldgerät abruft. Dieses Abrufen zusätzlicher Informationen am das Ereignis aussendenden Feldgerät durch den zuständigen Master dient gleichzeitig als Empfangsbestätigung des Masters. Wird ein Ereignistelegramm nicht bestätigt, dann wird es solange in regelmäßigen Abständen (beispielsweise etwa 10 s oder mit einer logarithmisch wachsenden Zeit) wiederholt bis eine Bestätigung von einem Master stattfindet.

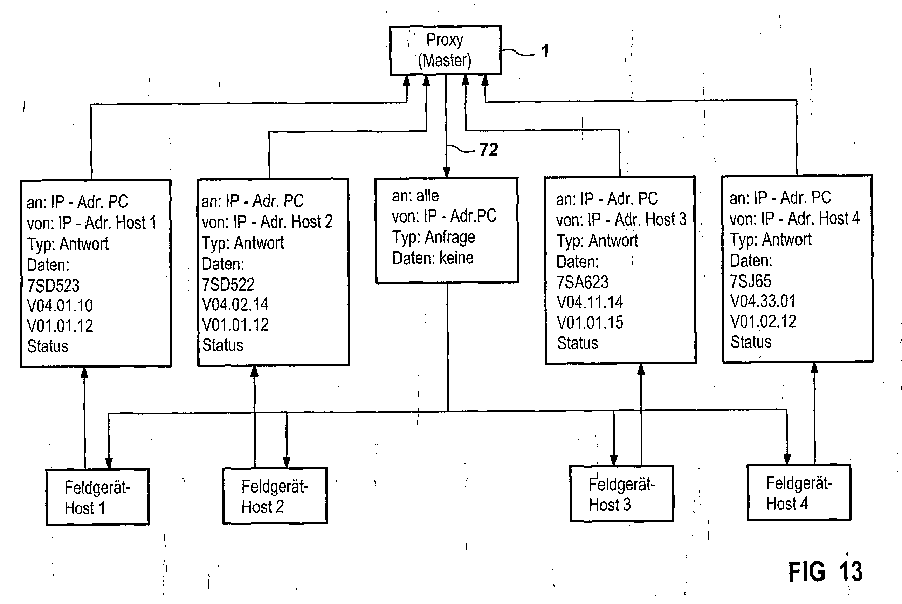

Figur 13 zeigt eine schematische Darstellung zur Erläuterung des Verfahrens im Rahmen der Konfigurationsabfrage.

Der Proxyserver 1 sendet als Master eine Konfigurationsanfrage 72 als Broadcast an alle Teilnehmer im Netzwerk. Alle Feldgeräte FG1...FGN antworten mit einem UDP-Datagramm an die IP-Adresse des Masters, der die Konfigurationsanfrage ausgesandt hat. Dieses UDP-Datagramm enthält wie bereits dargestellt die wichtigsten Informationen über die angeschlossenen Geräte.

### Geräteverwaltung

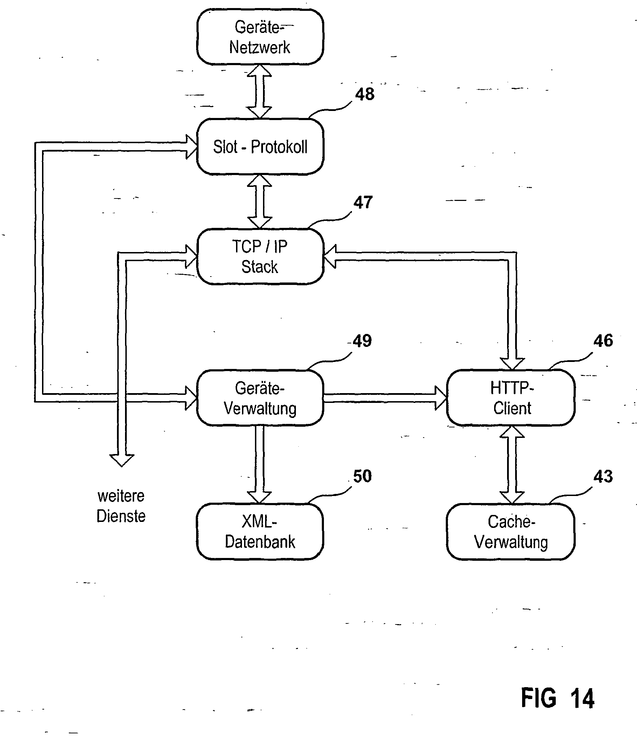

Die Verwaltung der mit Hilfe der Geräteerkennung bei Nutzung des Sternkopplers 39 oder des Broadcast-Dienstes erkannten Feldgeräte bzw. Slaves erfolgt im Proxyserver 1 mit Hilfe der Geräteverwaltung 49 (vgl. Figur 8). Figur 14 zeigt ein schematisches Blockdiagramm der Anbindung der Geräteverwaltung 49 im Proxyserver 1.

Die Geräteverwaltung 49 stellt der Cacheverwaltung 43 und der XML-Datenbank 50 Informationen über die im Gerätenetzwerk erkannten Feldgeräte FG1...FGN zur Verfügung. Dazu bezieht die Geräteverwaltung 49 ihre Informationen über die angeschlossenen Feldgeräte FG1...FGN aus dem im Rahmen des Slot-Protokolls 48 ablaufenden Verfahrens. Auf diese Weise werden die IP-Adressen der angeschlossenen Feldgeräte FG1...FGN bereitgestellt. Die Geräteverwaltung 49 wird vom Slot-Protokoll 48 mit den Informationen über die erkannten Feldgeräte FG1...FGN versorgt. Das Slot-Protokoll 48 liefert der Geräteverwaltung 49 nur die IP-Adressen der erkannten Feldgeräte FG1...FGN. Alle weiteren Informationen über die Feldgeräte FG1...FGN, die durch die Geräteverwaltung 49 im Proxyserver 1 bereitzustellen sind, werden mit des Herunterladens von HTTP-Daten in festgelegten Dateien aus den Feldgeräte FG1...FGN beschafft. Die Geräteverwaltung 49 stellt mit Hilfe der bekannten IP-Adressen aller erkannten Feldgeräte FG1...FGN der Cacheverwaltung 43 die folgenden Informationen über die Feldgeräte FG1...FGN zur Verfügung: Feldgeräte-Typ, Feldgeräte-Version und Version des Dateiblocks für das Beobachtungs- und Bediensystem.

Im Dateicache 45 (vgl. Figur 8) sind diese Informationen für die dort bereits gespeicherten Dateien ebenfalls vorhanden. Damit kann bei einer Anforderung einer Datei von einem bestimmten der Feldgeräte FG1...FGN anhand dieser Informationen entschieden werden, ob die im Dateicache 45 vorliegende Datei mit der in dem Feldgerät verfügbaren Datei identisch ist, ohne den Dateikopf der angeforderten Datei aus dem bestimmten Feldgerät zu lesen. Es müssen nur die im Dateicache 45 vorliegenden Versionsinformationen für die Datei mit den Informationen aus der Geräteverwaltung 49 für die IP-Adresse des bestimmten Feldgeräts verglichen werden.

Die Anbindung der Geräteverwaltung 49 an die XML-Datenbank 50 dient der Bereitstellung von Informationen aus den Feldgeräten FG1...FGN. Diese Informationen werden in Form einer XML-Datei aus den Feldgeräten FG1...FGN geladen. Die folgende Tabelle zeigt eine Übersicht über die Inhalte dieser Datei:

| Information | | Tag | Beschreibung |
|---|---|---|---|
| Gerätetyp | | DEV_TYPE | Stellen 1..6 der MLFB |
| MLFB | | MLFB | vollständige MLFB des Gerätes |
| BF-Nummer | | BF_NR | Gerätekennung ("unique number") |
| Version | | VER_KEYS | Liste von Versionsschlüsseln |
| | Dateisystem | VERSION | Datum und Versionsnummer des Dateisystems |
| | Firmware | VERSION | Datum und Versionsnummer der Gerätefirmware |
| | Systemfirmware | VERSION | Datum und Versionsnummer der im Gerät verwendeten Systemfirmware |
| "non cacheable" Dateien | | NOCACHE | Liste aller Dateien, die immer direkt vom Gerät geholt werden müssen |
| Menübaum | | MENU | Gerätebedienbaum zur Einbettung in den Proxyserver-Bedienbaum |
| Prozessdaten | | DATA_OBJ | Liste der XML-Dateien, die alle vom Gerät lieferbaren Prozessdaten beschreiben |

Alle diese Informationen werden in einer Datei "DevData.xml" gespeichert. Die Geräteverwaltung 49 veranlasst ein HTTP-Herunterladen dieser Datei, wenn eines der Feldgeräte FG1...FGN vom Slot-Protokoll 48 gefunden wurde. Alle weiteren Dateien werden von der Geräteverwaltung 49 nur dann aus dem Feldgerät geladen, wenn deren Dateipfad in dieser XML-Datei enthalten ist, d.h. es werden alle mit einem <DEV_PATH>-Tag gekapselten Dateien geladen.

Die Datei "DevData.xml" wird im Proxyserver 1 nach dem Herunterladen mit Hilfe des XSL-Parsers 54 in das interne Format des Proxyservers 1 transformiert und anschließend in der XML-Datenbank 50 des Proxyservers 1 eingetragen.

### XSL-Parser

Der XSL-Parser 54 (vgl. Figur 8) dient der Erzeugung von dynamisch generierten HTML-Dateien aus der zentralen XML-Datenbank 50 des Proxyservers 1. Dazu werden lokal im Proxyserver 1 abgelegte XSL-Scripte benutzt. Die XSL-Scripte können mit Hilfe einer Admin-Seite in den Proxyserver 1 eingespielt werden.

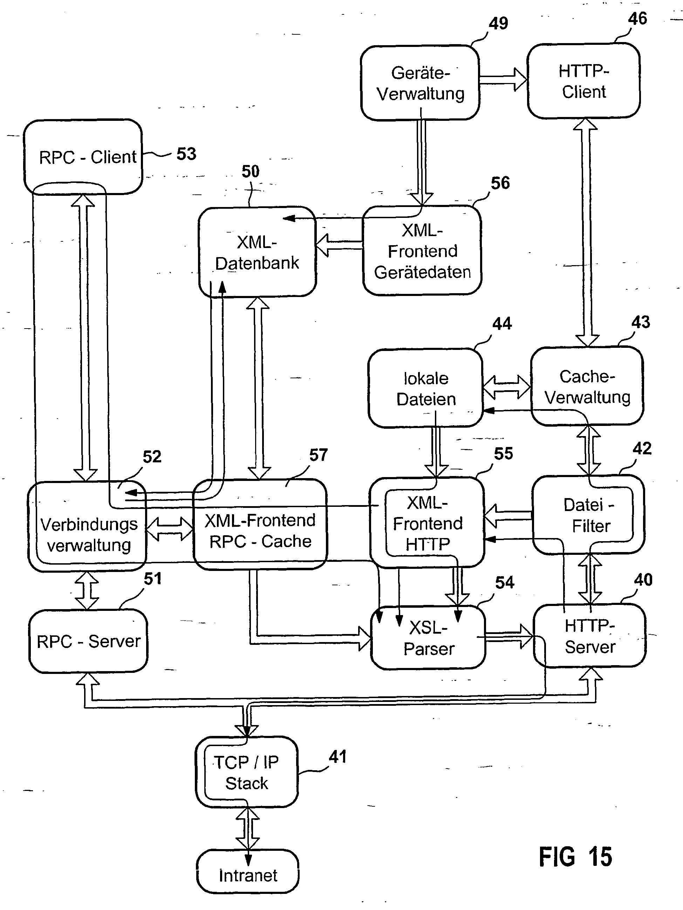

Figur 15 zeigt die Einbindung des XSL-Parsers 54 in dem Proxyserver 1.

Wird über den HTTP-Server 40 eine XM1-Datei von den Nutzereinrichtungen N1...NN aus dem Intranet angefordert, dann wird diese Anforderung vom Datei-Filter 42 ausgefiltert und an das XML-Front-end HTTP 55 weitergeleitet. Dieses Front-end sucht eine zur angeforderten XML-Datei gehöriges XSL-Transformationsscript und startet den XSL-Parser 54 mit diesen beiden Dateien.

Da dynamisch generierte HTML-Seiten die verwendeten Daten immer aus der lokal im Proxyserver 1 liegenden XML-Datenbank 50 verwenden, muss der Inhalt dieser Datenbank mit den in den Geräten vorhandenen Daten abgeglichen werden. Dieser Abgleichprozess ist deshalb erforderlich, da viele in der XML-Datenbank 50 abgelegen Daten wie z. B. Messwerte zeitveränderlich sind. Diesen Abgleich übernimmt der Block XML-Front-end RPC-Cache 57. Bei einem Zugriff vom XSL-Parser 54 auf die XML-Datenbank 50 wird vom zwischengeschalteten XML-Front-end 57 die Gültigkeitsdauer der angeforderten Information überprüft. Ist die angeforderte Information bereits ungültig geworden, dann wird sie von der Verbindungsverwaltung 52 neu aus dem RPC-Client 53 aus dem Gerät angefordert,-in der XML-Datenbank 50 aktualisiert und an den XSL-Parser 54 weitergeleitet.
Die Geräteverwaltung 49 überwacht fortlaufend den Status der am Gerätenetzwerk angeschlossenen Geräte und aktualisiert diese Informationen mittels des XML-Front-end Gerätedaten 56 in der XML-Datenbank 50.

Der XSL-Parser 54 ist das.Hauptbindeglied bei der Darstellung der aktuellen, von den Feldgeräten FG1...FGN empfangenen Daten aus der XML-Datenbank 50. Jedes XSL-Script gibt Transformationsregeln vor, die festlegen, in welcher Weise bestimmte Daten aus der XML-Datenbank 50 in Form von HTML-Seiten in den Nutzereinrichtungen N1...NN anzuzeigen sind. Eines der Grundprinzipien von XML ist die Trennung von Inhalt und Präsentation. Ein XML-Dokument enthält nur "Inhalt", seine Präsentation muss, in Form eines Stylesheets, gesondert definiert werden. Es gibt verschiedene Möglichkeiten die Darstellungsinformation zu einem XML-Dokument hinzuzufügen. Diese beruhen auf zwei Grundverfahren: Entweder wird das Dokument gemäß eines Stylesheets in eine darstellbare Form gebracht oder das Stylesheet leitet den Darstellungsmechanismus dabei an, wie die einzelnen Elemente des Dokuments darzustellen sind. Diese beiden Grundverfahren können in verschiedener Weise variiert werden:
- CSS-Stylesheet + XML-Dokument → XML-fähiger Browser Der Browser verarbeitet das Dokument und die Darstellungsinformationen in Form eines CSS-Stylesheets und erzeugt eine Präsentation.
- XSL-Stylesheet + XML-Dokument → XSL-fähiges Darstellungsprogramm
   Ein Darstellungsprogramm, das XSL-Stylesheets verarbeiten kann, erhält neben dem Dokument die Präsentationsinformation in Form eines XSL-Stylesheets.
- XSL-Stylesheet + XML-Dokument → XSL-Transformator → HTML-Dokument
   Das XML-Dokument wird entsprechend der Transformationsregeln eines XSL-Stylesheets von einem XSL-Transformator in ein (X)HTML-Dokument transformiert, das dann von einem Browser dargestellt werden kann.

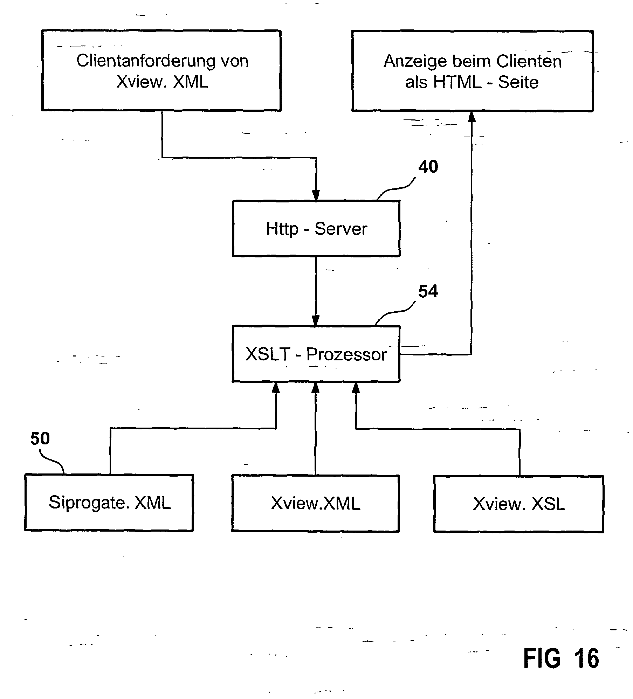

Figur 16 zeigt ein schematisches Blockschaltbild eines XSLT-Prozessors (XSL - "Extended Stylesheet Language Transformation").

Das in Figur 16 dargestellte Blockschaltbild verdeutlicht noch einmal den Datenfluss, wenn eine XML-Datei angefordert wird. Die vom Client angeforderte Datei Xview.XML wird vom HTTP-Server an den XSLT-Prozessor 54 weitergeleitet. Dieser sucht die zur angeforderten Datei Xview.XSL gehörige Datei Xview.XSL und startet den XSLT-Prozessor 54 mit diesen beiden Dateien. Soll in dem über die angeforderte Datei Xview.XML gestarteten Transformationsprozess Prozessdaten aus der XML-Datenbank 50 des Proxyservers verwendet werden, dann muss das Transformationsscript Xview.XSL einen Verweis auf diese Datenbank enthalten. In dem in Figur 16 dargestellten Beispiel hat diese XML-Datenbank 50 den Namen Siprogate.XML.

Da alle mit Hilfe der Nutzereinrichtungen N1...NN angezeigten Informationen bei ihrer Anforderung einen XSLT-Prozessor durchlaufen, ist es zweckmäßig, die hierbei angeforderten Informationen wie bereits beschrieben mit Hilfe des XML-Frontends RPC-Cache 57_auf ihre Gültigkeit zu prüfen und das Resultat für einen Aktualisierungsmechanismus zu verwenden. Hierzu muss der XSLT-Parser so manipuliert werden, dass fest -gestellt werden kann, welche Daten aus den einzelnen Datenbanken bei der Gestaltung der zu erzeugenden HTML-Seite beteiligt sind. Anhand dieser Information wird dann in einem zweiten Schritt festgestellt, ob diese Daten aktuell sind. Daraufhin werden die dazu erforderlichen Aktualisierungsmechanismen angestoßen, sofern dies notwendig ist, und im Anschluss der Parservorgang noch einmal gestartet, wobei immer nur jene Daten aktualisiert werden, die gegenwärtig in jeglicher Form einem Benutzer mit Hilfe einer oder mehrerer der Nutzereinrichtungen N1...NN angezeigt werden. Das wird dadurch erreicht, dass nur die angeforderten Daten in der XML-Datenbank aktualisiert werden. Aufgrund der möglicherweise erheblichen Gesamtgröße der XML-Datenbank 50 ergibt sich mit Hilfe dieses Mechanismus eine Reduzierung der zwischen den Feldgeräten FG1...FGN und dem Proxyserver 1 übertragenen Daten, da einerseits nur auf Anforderung und andererseits immer nur die für die jeweilige Darstellung erforderlichen Daten geholt werden.

## Patentansprüche

1. Verfahren zum Bedienen und/oder zum Beobachten eines Feldgeräts (FG1, ..., FGN) mit Hilfe einer Nutzereinrichtung (N1, ..., NN), bei dem eine Proxy-Servereinrichtung (1) ausgebildet wird, die Proxy-Servereinrichtung (1) mit dem Feldgerät (FG1, ..., FGN) und der Nutzereinrichtung (N1, ..., NN) in Verbindung steht, um zum Bedienen und/oder zum Beobachten der Feldgeräte (FG1, ..., FGN) mittels der Nutzereinrichtung (N1, ..., NN) jeweils elektronische Daten auszutauschen,
**dadurch gekennzeichnet, dass**
die zum Bedienen und/oder zum Beobachten des Feldgeräts (FG1, ..., FGN) auszutauschenden, elektronischen Daten statische Daten, die nach einem ersten Protokollstandard übertragen werden, und dynamische Daten umfassen, die nach einem zweiten Protokollstandard übertragen werden, der von dem ersten Protokollstandard verschieden ist.

2. Verfahren nach Anspruch 1,
**dadurch gekennzeichnet, dass**
der erste Protokollstandard das HTTP-Protokoll ist.

3. Verfahren nach Anspruch 1 oder 2,
**dadurch gekennzeichnet, dass**
mit Hilfe des zweiten Protokollstandards ein verbindungsloses Protokoll genutzt wird.

4. Verfahren nach einem der vorangehenden Ansprüche,
**dadurch gekennzeichnet, dass**
die statischen Daten bei einem erstmaligen Aufruf durch die Nutzereinrichtung (N1, ..., NN) von dem Feldgerät (FGI, ..., FGN) an die Proxy-Servereinrichtung (1) übertragen und in einer Speichereinrichtung der Proxy-Servereinrichtung (1) gespeichert werden, so dass die statischen Daten für einen erneuten Abruf durch die Nutzereinrichtung (N1, ..., NN) in der Proxy-Servereinrichtung (1) zur Verfügung stehen.

5. Verfahren nach einem der vorangehenden Ansprüche,
**dadurch gekennzeichnet, dass** die dynamischen Daten bei jedem Aufruf durch die Nutzereinrichtung (N1, ..., NN) von dem Feldgerät (FG1, ..., FGN) an die Proxy-Servereinrichtung (1) und von der Proxy-Servereinrichtung (1) an die Nutzereinrichtung (N1, ..., NN) übertragen werden.

6. Verfahren nach einem der vorangehenden Ansprüche,
**dadurch gekennzeichnet, dass** die dynamischen und/oder die statischen Daten von einer Servereinrichtung (HS1, ..., HSN) des Feldgeräts (FG1, ..., FGN) an die Proxy-Servereinrichtung (1) übertragen werden.

7. Verfahren nach einem der vorangehenden Ansprüche,
**dadurch gekennzeichnet, dass**
die Proxy-Servereinrichtung (1) mittels einer auf der Nutzereinrichtung (N1, ..., NN) installierten Browser-Einrichtung konfigurierbar ist.

8. Proxy-Servervorrichtung (1) mit Schnittstellenmitteln zum Ausbilden einer Datenverbindung mit einem Feldgeräts (FG1, ..., FGN) und weiteren Schnittstellenmitteln zum Ausbilden einer weiteren Datenverbindung mit einer Nutzereinrichtung (N1, ..., NN), so dass zum Überwachen und/oder zum Bedienen des Feldgeräts (FG1, ..., FGN) mittels der Nutzereinrichtung (N1, ..., NN) jeweils elektronische Daten ausgetauscht werden können, und mit Protokollbearbeitungsmitteln, so dass mit dem Feldgerät (FG1, ..., FGN) und der Nutzereinrichtung (N1, ..., NN) jeweils statische, elektronische Daten, die nach einem ersten Protokollstandard übertragen werden, und dynamische, elektronische Daten ausgetauscht werden können, die nach einem zweiten Protokollstandard übertragen werden, wobei der zweite Protokollstandard vom ersten verschieden ist.

9. Vorrichtung nach Anspruch 8,
**gekennzeichnet durch** eine Speichereinrichtung zum Speichern der statischen, elektronischen Daten.

10. Vorrichtung nach Anspruch 8 oder 9,
**gekennzeichnet durch** eine Parsereinrichtung (54) zum automatischen Umwandeln elektronischer Daten in verschieden Formate.

11. Verwendung eines Verfahrens nach einem der Ansprüche 1 bis 8 und/oder einer Proxy-Servereinrichtung (1) nach einem Ansprüche 9 bis 11 zum Bedienen/Überwachen eines Feldgeräts (FG1, ..., FGN) in einer energietechnischen Anlage.

## Claims

1. Method for operating and/or observing a field device (FG1, ..., FGN) using a user facility (N1, ..., NN), in which a proxy server facility (1) is present, the proxy server facility (1) being connected to the field device (FG1, ..., FGN) and to the user facility (N1, ..., NN) for the purpose of respectively interchanging electronic data using the user facility (N1, ..., NN) in order to operate and/or observe the field devices (FG1, ..., FGN),
**characterized in that**
the electronic data to be interchanged for the purpose of operating and/or observing the field device (FG1, ..., FGN) comprise static data, which are transferred on the basis of a first protocol standard, and dynamic data, which are transferred on the basis of a second protocol standard, which is different from the first protocol standard.

2. Method according to Claim 1,
**characterized in that**
the first protocol standard is the HTTP protocol.

3. Method according to Claim 1 or 2,
**characterized in that**
the second protocol standard is used in order to use a connectionless protocol.

4. Method according to one of the preceding claims,
**characterized in that**
the static data are transferred from the field device (FG1, ..., FGN) to the proxy server facility (1) and are stored in a memory facility in the proxy server facility (1) when they are first called by the user facility (N1, ..., NN), which means that the static data are available in the proxy server facility (1) for fresh retrieval by the user facility (N1, ..., NN).

5. Method according to one of the preceding claims,
**characterized in that**
the dynamic data are transferred from the field device (FG1, ..., FGN) to the proxy server facility (1) and from the proxy server facility (1) to the user facility (N1, ..., NN) whenever they are called by the user facility (N1, ..., NN).

6. Method according to one of the preceding claims,
**characterized in that** the dynamic and/or the static data are transferred from a server facility (HS1, ..., HSN) in the field device (FG1, ..., FGN) to the proxy server facility (1).

7. Method according to one of the preceding claims,
**characterized in that**
the proxy server facility (1) can be configured using a browser facility which is installed on the user facility (N1, ..., NN).

8. Proxy server apparatus (1) having interface means for producing a data connection to a field device (FG1, ..., FGN) and further interface means for producing a further data connection to a user facility (N1, ..., NN), so that it is respectively possible to use the user facility (N1, ..., NN) to interchange electronic data in order to monitor and/or operate the field device (FG1, ..., FGN), and to protocol processing means, so that the field device (FG1, ..., FGN) and the user facility (N1, ..., NN) are respectively able to be used to interchange static, electronic data, which are transferred on the basis of a first protocol standard, and dynamic, electronic data, which are transferred on the basis of a second protocol standard, the second protocol standard being different from the first.

9. Apparatus according to Claim 8,
**characterized by** a memory facility for storing the static, electronic data.

10. Apparatus according to Claim 8 or 9,
**characterized by** a parser facility (54) for automatically converting electronic data into various formats.

11. Use of a method according to one of Claims 1 to 8 and/or of a proxy server facility (1) according to one of Claims 9 to 11 for operating/monitoring a field device (FG1, ..., FGN) in a power plant.

## Revendications

1. Procédé pour la commande et/ou la surveillance d'un appareil de terrain (FG1 à FGN) à l'aide d'un dispositif utilisateur (N1 à NN),
dans lequel il est prévu un dispositif serveur proxy (1), lequel dispositif serveur proxy (1) est en liaison avec l'appareil de terrain (FG1 à FGN) et avec le dispositif utilisateur (N1 à NN) pour échanger des données électroniques en vue de la commande et/ou la surveillance des appareils de terrain (FG1 à FGN) au moyen du dispositif utilisateur (N1 à NN),
**caractérisé par le fait que** les données électroniques à échanger pour la commande et/ou la surveillance des appareils de terrain (FG1 à FGN) comprennent des données statiques qui sont transmises selon une première norme de protocole et des données dynamiques qui sont transmises selon une deuxième norme de protocole qui est différente de la première norme de protocole.

2. Procédé selon la revendication 1,
**caractérisé par le fait que** la première norme de protocole est le protocole HTTP.

3. Procédé selon la revendication 1 ou 2,
**caractérisé par le fait qu'**un protocole sans connexion est utilisé à l'aide de la deuxième norme de protocole.

4. Procédé selon l'une des revendications précédentes,
**caractérisé par le fait que**, lors d'un premier appel par le dispositif utilisateur (N1 à NN), les données statiques sont transmises par l'appareil de terrain (FG1 à FGN) au dispositif serveur proxy (1) et sont mémorisées dans un dispositif de mémorisation du dispositif serveur proxy (1) de telle sorte que les données statiques sont disponibles dans le dispositif serveur proxy (1) pour un nouvel appel par le dispositif utilisateur (N1 à NN).

5. Procédé selon l'une des revendications précédentes,
**caractérisé par le fait que**, à chaque appel par le dispositif utilisateur (N1 à NN), les données dynamiques sont transmises par l'appareil de terrain (FG1 à FGN) au dispositif serveur proxy (1) et par le dispositif serveur proxy (1) au dispositif utilisateur (N1 à NN).

6. Procédé selon l'une des revendications précédentes,
**caractérisé par le fait que** les données dynamiques et/ou les données statiques sont transmises par un dispositif serveur (HS1 à HSN) de l'appareil de terrain (FG1 à FGN) au dispositif serveur proxy (1).

7. Procédé selon l'une des revendications précédentes,
**caractérisé par le fait que** le dispositif serveur proxy (1) est configurable au moyen d'un dispositif navigateur installé sur le dispositif utilisateur (N1 à NN).

8. Dispositif serveur proxy (1) comportant des moyens d'interface pour concevoir une liaison de données avec un appareil de terrain (FG1 à FGN) et d'autres moyens d'interface pour concevoir une autre liaison de données avec un dispositif utilisateur (N1 à NN), de telle sorte que, pour la surveillance et/ou la commande de l'appareil de terrain (FG1 à FGN) au moyen du dispositif utilisateur (N1 à NN), des données électroniques peuvent être échangées respectivement, ainsi que des moyens de traitement de protocole de telle sorte que des données électroniques statiques qui sont transmises selon une première norme de protocole et des données électroniques dynamiques qui sont transmises selon une deuxième norme de protocole peuvent être échangées avec l'appareil de terrain (FG1 à FGN) et avec le dispositif utilisateur (N1 à NN), la deuxième norme de protocole étant différente de la première.

9. Dispositif selon la revendication 8,
**caractérisé par** un dispositif de mémorisation pour mémoriser des données électroniques statiques.

10. Dispositif selon la revendication 8 ou 9,
**caractérisé par** un dispositif analyseur syntaxique ou parser (54) pour la transformation automatique de données électroniques en différents formats.

11. Utilisation d'un procédé selon l'une des revendications 1 à 8 et/ou d'un dispositif serveur proxy (1) selon l'une des revendications 9 à 11 pour commander / surveiller un appareil de terrain (FG1 à FGN) dans une installation technique d'énergie.
